(19) **Europäisches Patentamt / European Patent Office / Office européen des brevets**

(11) **EP 4 541 842 A1**

(12) **EUROPEAN PATENT APPLICATION**
published in accordance with Art. 153(4) EPC

(43) Date of publication:
**23.04.2025 Bulletin 2025/17**

(21) Application number: **23823873.7**

(22) Date of filing: **12.06.2023**

(51) International Patent Classification (IPC):
$C08J\ 9/16^{(2006.01)}$    $C08F\ 255/02^{(2006.01)}$
$C08L\ 23/02^{(2025.01)}$    $C08L\ 23/06^{(2006.01)}$
$C08L\ 23/08^{(2025.01)}$    $C08L\ 23/10^{(2006.01)}$
$C08L\ 51/06^{(2006.01)}$

(52) Cooperative Patent Classification (CPC):
**C08F 255/02; C08J 9/16; C08L 23/02; C08L 23/06;
C08L 23/08; C08L 23/10; C08L 51/06**

(86) International application number:
**PCT/JP2023/021683**

(87) International publication number:
**WO 2023/243583 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022 JP 2022096829**

(71) Applicant: **Sekisui Kasei Co., Ltd.
Kita-ku
Osaka-shi
Osaka 530-8565 (JP)**

(72) Inventor: **OWAKI, Hiroki
Osaka-shi, Osaka 530-8565 (JP)**

(74) Representative: **Hoffmann Eitle
Patent- und Rechtsanwälte PartmbB
Arabellastraße 30
81925 München (DE)**

(54) **SEED PARTICLES, COMPOSITE RESIN PARTICLES, FOAM PARTICLES, MOLDED FOAM, AND METHOD FOR PRODUCING COMPOSITE RESIN PARTICLES**

(57)    An object of the present invention is to provide seed particles that generate a less amount of polystyrene powder and that allow for easy dissipation of a foaming agent; composite resin particles; a method for producing the composite resin particles; and the like. The present invention provides seed particles (B) for producing composite resin particles (C) for the production of foam particles, the composite resin particles (C) comprising a polyolefin-based resin and a polystyrene-based resin, the composite resin particles (C) being seed-polymerization composite resin particles of styrene-based monomer-seed particles (B), the seed particles (B) containing a styrene-based monomer-polyolefin seed polymerization composite resin (A) in an amount of 20 to 100 mass%, based on the seed particles (B), and the seed particles (B) further containing, in addition to a polyolefin-based resin contained in the seed polymerization composite resin (A), a second polyolefin-based resin in an amount of 0 to 80 mass%, based on the seed particles (B); the ratio of the content by mass of the polyolefin-based resin to the content by mass of the polystyrene-based resin in the seed particles (B) being in the range of 20:80 to 90:10; and the polystyrene-based resin in the seed particles (B) having a mass average molecular weight of $1.0 \times 10^5$ to $5.0 \times 10^5$.

EP 4 541 842 A1

## Description

Technical Field

The present invention relates to seed particles, composite resin particles, foam particles, a foam molded body, a method for producing composite resin particles, and the like.

Background Art

It is known that a foam molded body composed of a polystyrene-based resin has excellent rigidity, thermal insulation, lightweight properties, water resistance, and foam moldability, but low chemical resistance and low impact resistance. To compensate for these low resistances, a composite resin foam molded body obtained from composite resin particles of a polystyrene-based resin and a polyolefin-based resin has been utilized. Composite resin particles are generally produced by shredding a base resin of a polyolefin-based resin, such as a polyethylene-based resin to form seed particles (also referred to as core particles), and adding a styrene-based monomer to the seed particles, followed by polymerization. This polymerization is also referred to as seed polymerization. The obtained composite resin particles contain a polyolefin-based resin and a polystyrene. The obtained composite resin particles are also called, for example, seed polymerization composite resin particles or styrene-based monomer-polyolefin composite resin particles. Composite resin particles are generally mixed with a foaming gas to form expandable particles, the expandable particles are subjected to foaming (also referred to as pre-foaming) to form foam particles (also referred to as pre-foamed particles), and the foam particles are then placed into a mold and heated to produce a composite resin foam molded body.
Such composite resin foam molded bodies have been widely used as automobile parts and transportation materials. In any application, the composite resin foam molded body is required to have high strength, easy moldability, and the like. In order to increase the strength of composite resin foam molded bodies, various methods, such as using high-density polyethylene (HDPE) as a polyolefin-based resin and/or increasing the amount of a polystyrene component, have been attempted. However, high-density polyethylene, which is a crystalline resin, does not have good compatibility with polystyrene (PS). As a result, unless the vapor pressure used in foam molding is increased or the heating time with vapor is extended, it is difficult to obtain a molded body having the desired properties in terms of strength, shape, density, etc. Thus, the use of high-density polyethylene is not considered to provide good moldability. Furthermore, the use of high-pressure vapor or long heating time with vapor increases the energy required for foam molding. Therefore, attempts have been made to improve compatibility with polystyrene by further adding an ethylene-vinyl acetate copolymer (EVA) to high-density polyethylene.
On the other hand, seed particles containing linear low-density polyethylene as a polyolefin-based resin and a polystyrene-based resin are also known (Patent Literature (PTL) 1 and Patent Literature (PTL) 2).

Citation List

Patent Literature

PTL 1: JP2014-196444A
PTL 2: JP2016-190991A

Summary of Invention

Technical Problem

However, PTL 1 and PTL 2 describe in the Examples that only linear low-density polyethylene was used as the polyolefin-based resin constituting seed particles and that the seed particles were produced by melt-kneading the linear low-density polyethylene and polystyrene. The present inventors have found that when high-density polyethylene, polypropylene, or the like is used in the methods described in PTL 1 and PTL 2, absorption of a styrene-based monomer by seed particles in seed polymerization tends to be difficult due to poor compatibility of such a polyolefin-based resin with polystyrene, and unabsorbed styrene-based monomers are polymerized to generate a large amount of polystyrene powder. This powder adheres to the surface of the mold during foam molding, causing a problem in terms of shortening the life of the mold. The present inventors further found that even when a linear low-density polyethylene is used, an increased amount of polystyrene-based resin (i.e., use of a large amount of styrene monomer in seed polymerization) causes generation of a large amount of polystyrene powder likewise.

The present inventors further found that in the composite resin particles described in PTL 1, a polystyrene component is present in large amounts in the surface layer of the particles, and that therefore, it takes a long time to adjust the foaming agent content of the foam particles (i.e., for the forming agent to dissipate). That is, when a foaming agent is incorporated into the composite resin particles to produce foam particles, the foaming agent in the foam particles is allowed to dissipate in order to adjust the foaming agent content to an amount suitable for subsequent foam molding. However, if a large amount of a polystyrene component is present in the surface layer of the particles, the dissipation of the foaming agent from the foam particles is inhibited, thus resulting in a longer time required for dissipation. If the time required for dissipation can be shortened, the molding cycle can be shortened.

An object of the present invention is to provide: seed particles that generate a less amount of polystyrene powder and that allow for easy dissipation of a foaming agent; composite resin particles; a method for producing the composite resin particles; and the like. Another object of the present invention is to provide composite resin foam particles that can be foam-molded at a low vapor pressure and that have excellent moldability. Another object of the present invention is to provide a foam molded body having excellent compression strength.

Means for Solving the Problem

In view of the above problems, the present inventors found that when particles that comprise, as a base resin, a styrene-based monomer-polyolefin seed polymerization composite resin (A) obtained by impregnating a polyolefin-based resin with a styrene-based monomer and polymerizing the styrene-based monomer on the polyolefin-based resin are used, or when particles that comprise, as a base resin, a mixed resin of the seed polymerization composite resin (A) and a second polyolefin-based resin are used, at least one of the above problems can be solved; and various polyolefin-based resins can be easily used as the polyolefin-based resin and a resin derived from a foam molded body of a styrene-based monomer-polyolefin composite resin (for example, a recycled resin of a foam molded body of a styrene-based monomer-polyolefin composite resin) can be reused as a base resin of the seed polymerization composite resin (A). Based on these findings, the present inventors have accomplished the present invention.

The present invention typically includes the following embodiments.

Item 1.

Seed particles (B) for producing composite resin particles (C) for the production of foam particles comprising a polyolefin-based resin and a polystyrene-based resin,

the composite resin particles (C) being seed-polymerization composite resin particles of styrene-based monomer-seed particles (B),

the seed particles (B) containing a styrene-based monomer-polyolefin seed polymerization composite resin (A) in an amount of 20 to 100 mass%, based on the seed particles (B), and

the seed particles (B) further containing, in addition to a polyolefin-based resin contained in the seed polymerization composite resin (A), a second polyolefin-based resin in an amount of 0 to 80 mass%, based on the seed particles (B);

the ratio of the content by mass of the polyolefin-based resin to the content by mass of the polystyrene-based resin in the seed particles (B) being in the range of 20:80 to 90:10; and

the polystyrene-based resin in the seed particles (B) having a mass average molecular weight of $1.0 \times 10^5$ to $5.0 \times 10^5$.

Item 2.

The seed particles (B) according to Item 1, wherein the seed polymerization composite resin (A) has a gel fraction of 5 to 40 mass% as measured in the following manner:

after 1 g of the seed polymerization composite resin (A) is weighed and placed in a flask and 100 ml of toluene is added, the resulting mixture is heated under reflux in an oil bath at 130°C for 24 hours to dissolve the resin;

immediately after the flask is removed from the oil bath, the contents of the flask are filtered through a wire net of 80 mesh (diameter: 0.12 mm), and the wire net and insoluble matter remaining on the wire net are allowed to stand in an oven at 130°C for 1 hour;

the pressure is reduced with a vacuum pump and the wire net and the insoluble matter remaining on the wire net are further allowed to stand under reduced pressure for 2 hours to remove the toluene; and

the weight of the solid remaining on the wire net is measured and the gel fraction is calculated according to the following formula:

$$\text{Gel fraction (\%)} = \text{Weight of remaining solid (g)} / \text{Weight of sample (g)} \times 100.$$

Item 3.

The seed particles (B) according to Item 1 or 2, wherein the polyolefin-based resin contained in the seed polymerization composite resin (A) is at least one resin selected from the group consisting of an ethylene-based copolymer, a polyethylene-based resin, and a polypropylene-based resin, and the second polyolefin-based resin is at least one resin selected from the group consisting of an ethylene-based copolymer, a polyethylene-based resin, and a polypropylene-based resin.

Item 4.

The seed particles (B) according to Item 3, wherein

the ethylene-based copolymer is an ethylene-vinyl acetate copolymer, and
the polyethylene-based resin is at least one resin selected from the group consisting of linear low-density polyethylene, high-density polyethylene, and low-density polyethylene.

Item 5.

The seed particles (B) according to any one of Items 1 to 4, wherein the second polyolefin-based resin is a resin different from the polyolefin-based resin contained in the seed polymerization composite resin (A).

Item 6.

The seed particles (B) according to any one of Items 1 to 5, wherein the seed polymerization composite resin (A) is derived from a foam molded body of a styrene-based monomer-polyolefin composite resin.

Item 7.

Composite resin particles (C) for the production of foam particles, the composite resin particles (C) being seed polymerization composite resin particles of styrene-based monomer-seed particles (B), the seed particles (B) being the seed particles (B) of any one of Items 1 to 6.

Item 8.

The composite resin particles (C) according to Item 7, wherein the composite resin particles (C) contain a polystyrene-based resin forming a composite with the seed particles (B) in an amount of 100 to 500 parts by mass, based on 100 parts by mass of the seed particles (B).

Item 9.

Foam particles of the composite resin particles (C) of Item 7 or 8.

Item 10.

A foam molded body of the foam particles of Item 9.

Item 11.

The foam molded body according to Item 10, having a density of 20 to 200 $kg/m^3$.

Item 12.

A method for producing composite resin particles (C) for the production of foam particles comprising a polyolefin-based resin and a polystyrene-based resin, the method comprising the steps of:

shredding a base resin to obtain seed particles (B); and

impregnating the seed particles (B) with a styrene-based monomer and polymerizing the styrene-based monomer on the seed particles (B) to obtain composite resin particles (C), wherein

the base resin is a styrene-based monomer-polyolefin seed polymerization composite resin (A) obtained by the steps of impregnating polyolefin-based resin particles with a styrene-based monomer and polymerizing the styrene-based monomer on the polyolefin-based resin, or is a mixed resin of the seed polymerization composite resin (A) and a second polyolefin-based resin,

the seed particles (B) contain the seed polymerization composite resin (A) in an amount of 20 to 100 mass% based on the seed particles (B),

the seed particles (B) contain the second polyolefin-based resin in an amount of 0 to 80 mass%, based on the seed particles (B),

the ratio of the content by mass of the polyolefin-based resin to the content by mass of the polystyrene-based resin in the seed particles (B) is in the range of is 20:80 to 90:10; and

the polystyrene-based resin in the seed particles (B) has a mass average molecular weight of $1.0 \times 10^5$ to $5.0 \times 10^5$.

Item 13.

The method for producing composite resin particles (C) according to Item 12, wherein the seed polymerization composite resin (A) has a gel fraction of 5 to 40 mass% as measured in the following manner:

after 1 g of the seed polymerization composite resin (A) is weighed and placed in a flask and 100 ml of toluene is added, the resulting mixture is heated under reflux in an oil bath at 130°C for 24 hours to dissolve the resin;

immediately after the flask is removed from the oil bath, the contents of the flask are filtered through a wire net of 80 mesh (diameter: 0.12 mm), and the wire net and insoluble matter remaining on the wire net are allowed to stand in an oven at 130°C for 1 hour;

the pressure is reduced with a vacuum pump and the wire net and the insoluble matter remaining on the wire net are further allowed to stand under reduced pressure for 2 hours to remove the toluene; and

the weight of the solid remaining on the wire net is measured and the gel fraction is calculated according to the following formula:

$$\text{Gel fraction (\%)} = \text{Weight of remaining solid (g)} / \text{Weight of sample (g)} \times 100.$$

Item 14.

The method for producing composite resin particles (C) according to Item 12 or 13, wherein

the polyolefin-based resin contained in the seed polymerization composite resin (A) is at least one resin selected from the group consisting of an ethylene-based copolymer, a polyethylene-based resin, and a polypropylene-based resin, and

the second polyolefin-based resin is at least one resin selected from the group consisting of an ethylene-based copolymer, a polyethylene-based resin, and a polypropylene-based resin.

Item 15.

The method for producing composite resin particles (C) according to Item 14, wherein the ethylene-based copolymer is an ethylene-vinyl acetate copolymer, and the polyethylene-based resin is at least one resin selected from the group consisting of linear low-density polyethylene, high-density polyethylene, and low-density polyethylene.

Item 16.

The method for producing composite resin particles (C) according to any one of Items 12 to 15, wherein the second polyolefin-based resin is a resin that is different from the polyolefin-based resin contained in the seed polymerization composite resin (A).

Item 17.

The method for producing composite resin particles (C) according to any one of Items 12 to 16, wherein the seed polymerization composite resin (A) is derived from a foam molded body of a styrene-based monomer-polyolefin composite resin.

Item 18.

The method for producing composite resin particles (C) according to any one of Items 12 to 17, wherein in the step of obtaining the composite resin particles (C), the styrene-based monomer is used in an amount of 100 to 500 parts by mass, based on 100 parts by mass of the seed particles (B).

Effect of the Invention

According to the present invention, the foaming agent is allowed to dissipate easily and the foaming agent content of the foam particle can be reduced in a short time. In the present application, dissipation of the foaming agent is evaluated by the length of the molding cycle.
According to the present invention, the polystyrene polymer powder content (herein also referred to simply as "powder content") is reduced, thereby extending the mold life.
According to the present invention, because foam molding can be performed even with a medium having a low vapor pressure (for example, water vapor), the energy required for foam molding can be reduced. This simplifies the equipment required for foam molding, reduces the costs required for foam molding, and achieves excellent productivity of foam molded bodies.
According to the present invention, even if the amount of polystyrene-based resin is increased, various resins can be more easily used as the polyolefin-based resin.
According to the present invention, a composite resin derived from a styrene-based monomer-polyolefin composite resin foam molded body produced via seed polymerization (e.g., a recycled resin of a styrene-based monomer-polyolefin composite resin foam molded body) can be reused as a base resin for the seed particle of the present invention.
According to the seed particle etc. of the present invention, a foam molded body having excellent compression strength can be provided.
In the present specification, the terms "comprise" and "contain" are used with the intention of encompassing the phrases "consisting essentially of" and "consisting of."
In general, in foam molding using foam particles, a mold is filled with foam particles and heated to foam and fuse the foam particles to produce a foam molded body. The foam particles of a composite resin are roughly classified into: foam particles obtained by preparing resin particles by melt-kneading a base resin and then shredding the resin to obtain resin particles, adding a foaming agent to the resin particles, and pre-foaming the particles; and foam particles obtained by impregnating resin particles (seed particles) with another resin monomer and then polymerizing the monomer on the seed particles to form composite resin particles (also referred to as "seed polymerization composite resin particles"), adding a foaming agent to the composite resin particles, and pre-foaming the particles.
In the present specification, the composite resin (particles) obtained by impregnating the seed particles with a styrene-based monomer and polymerizing the monomer on the seed particles is also referred to as "styrene-based monomer-seed particle seed polymerization composite resin (particles)."
In the present specification, the composite resin (particles) obtained by impregnating polyolefin-based resin seed particles with a styrene-based monomer and polymerizing the styrene-based monomer on the seed particles is also referred to as a "styrene-based monomer-polyolefin seed polymerization composite resin (particles)."
In the present specification, particles prepared by impregnating composite resin particles with a foaming agent are also referred to as "expandable particles." In the present specification, particles obtained by pre-foaming expandable particles are also referred to as "foam particles" or "pre-foamed particles."
A main feature of the present invention is that as the seed particle (B) comprising a polyolefin-based resin and a polystyrene-based resin, which is used to produce seed polymerization composite resin particles, a styrene-based monomer-polyolefin seed polymerization composite resin (A) is used. In contrast, in the inventions described in PTL 1 and PTL 2, particles of a melt-kneaded product of polystyrene and linear low density polyethylene are used as seed particles containing a polyolefin-based resin and a polystyrene-based resin.

Styrene-based Monomer-Polyolefin Seed Polymerization Composite Resin (A)

The styrene-based monomer-polyolefin seed polymerization composite resin (A) is a composite resin obtained by impregnating seed particles of a polyolefin-based resin with a styrene-based monomer, and polymerizing the monomer. In the present invention, it is preferable to use the seed polymerization composite resin (A).

The seed polymerization composite resin (A) is typically composite resin particles obtained by impregnating polyolefin-based resin seed particles with a styrene monomer and polymerizing the monomer on the seed particles, i.e., performing seed polymerization. As the seed polymerization composite resin (A), a seed polymerization composite foam molded body of a polyolefin-based resin and a polystyrene-based resin produced through foam particles of the seed polymerization composite resin (A) can be used (reused).

When the seed polymerization composite foam molded body is used as a base resin for the seed polymerization composite resin (A), for example, the foam molded body is pulverized and then pelletized with an extruder or the like to obtain a recycled resin, which can be easily used as a base resin for seed particles.

The seed polymerization composite resin (A) may have a total volatile organic compound (also referred to as "TVOC") content of 1000 ppm or less, and preferably 0 to 800 ppm. If the TVOC content is within the above range, it is advantageous in terms of stabilizing monomer absorption when the seed polymerization composite resin (A) is used as seed particles. Here, TVOC does not include foaming agents.

TVOC Content

The TVOC (total volatile organic compound) content of the resin (e.g., the seed polymerization composite resin (A), the composite resin particles (C), or the like) is defined as the sum of the measurement values of volatile organic compounds (VOCs) as measured by the following three measurement methods. VOCs also include chemical substances other than the 13 items defined by the Ministry of Health, Labor, and Welfare. However, among the measurement values obtained here, the measurement value of the foaming agent contained in the sample resin is not included in the TVOC content.

VOC Measurement Method 1.

Measurement of Hydrocarbons Containing 5 or Fewer Carbon Atoms

A predetermined amount of a sample of composite resin particles is placed in a pyrolysis furnace at 180°C, and volatilized hydrocarbons are measured by gas chromatography. Gas chromatography (GC): GC-14B, produced by Shimadzu Corporation Pyrolysis furnace: PYR-1A, produced by Shimadzu Corporation Column: Porapak Q 80/100 (3 mm in diameter x 1.5 m)

Column temperature: 100°C
Detector (FID) temperature: 120°C

VOC Measurement Method 2.

Measurement of Hydrocarbons Ranging from Hydrocarbon Containing At Least 6 Carbon Atoms to Hydrocarbon Until a Peak of Styrene Appears in Gas Chromatogram

A predetermined amount of a sample of the composite resin particles is dissolved in dimethylformamide, and an internal standard solution (cyclopentanol) is added. The measurement is performed by GC. However, any peaks that cannot be identified are quantified in terms of the amount of toluene detected.

GC: GC-14A, produced by Shimadzu Corporation
Column: PEG-20M PT25% 60/80 (2.5 m)
Column temperature: 105°C
Detector (FID) temperature: 220°C

VOC Measurement Method 3.

Measurement of Hydrocarbons Ranging from Hydrocarbon After a Next Peak of Styrene Appears in Gas Chromatogram to $C_{16}$ Hydrocarbon (n-Hexadecane)

A predetermined amount of each sample of composite resin particles is dissolved in chloroform and measured with a gas chromatograph mass spectrometer (GCMS). However, a blank test is conducted using only a solvent in which no sample is dissolved, and the mass of the substance detected in the blank test is subtracted. Further, any peaks that cannot be identified are quantified in terms of the amount of toluene detected.

> GCMS: QP5000, produced by Shimadzu Corporation
> Column: DB-1, produced by J&W Scientific
> (1 μm × 0.25 mm in diameter × 60 m)
> Measurement conditions: Column temperature
> (After maintaining at 60°C for 1 minute, the temperature is increased to 300°C at a temperature rise rate of 10°C/min.)
> Split ratio: 10
> Carrier gas: He (1 ml/min)
> Interface temperature: 260°C

Polyolefin-based Resin

The polyolefin-based resin is not particularly limited, and any known resin can be used. The polyolefin-based resin may be crosslinked. Examples of the polyolefin-based resin include polyethylene-based resins and polypropylene-based resins.

Polyethylene-based Resin

The polyethylene-based resin is not particularly limited, and any known resin can be used. The polyethylene-based resin may be crosslinked.

Examples of the polyethylene-based resin include ethylene-based copolymers, branched low-density polyethylene, linear low-density polyethylene, medium-density polyethylene, high-density polyethylene, and crosslinked products of these polymers. These polyethylene-based resins can be used alone or in combination. From the viewpoint of molding processability (which, in the present specification, may mainly mean the ease of foam molding at a low vapor pressure or a high foam expansion ratio at the time of foaming), low-density polyethylene and linear low-density polyethylene are preferred. From the standpoint of strength, the polyethylene-based resin is preferably high-density polyethylene. From the standpoint of molding processability, the polyethylene-based resin is preferably an ethylene-based copolymer, in particular, an ethylene-vinyl acetate copolymer.

Low-density polyethylene (LDPE), linear low-density polyethylene (L-LDPE), and high-density polyethylene (HDPE) are generally considered to be distinguished from each other in terms of molecular structure as follows. That is, low-density polyethylene has short-chain branching and long-chain branching. Linear low-density polyethylene has short-chain branching (and may slightly have long-chain branching) and is thus somewhat linear. High-density polyethylene has little branching and is thus almost linear. Low-density polyethylene and linear low-density polyethylene generally have relatively lower densities than high-density polyethylene.

Examples of ethylene-based copolymers include ethylene-vinyl acetate copolymers, ethylene-ethyl acrylate copolymers, and ethylene-methyl methacrylate copolymers. From the standpoint of molding processability, ethylene-vinyl acetate copolymers are preferred. The ethylene-vinyl acetate copolymer is a copolymer of ethylene and vinyl acetate. The ethylene-vinyl acetate copolymer is superior to copolymers of ethylene and other ester-based monomers (e.g., alkyl acrylate ester, alkyl methacrylate ester, and aliphatic saturated vinyl monocarboxylic acid (excluding vinyl acetate)) in terms of a less amount of powder generated during the production of composite resin foam particles or a lower heating dimensional change rate.

The proportion of the vinyl acetate-derived component in the ethylene-vinyl acetate copolymer is preferably 1 to 20 mass%, more preferably 1 to 14 mass%, and even more preferably 1 to 10 mass%.

The melting point of the ethylene-vinyl acetate copolymer is not particularly limited, and can be, for example, 85 to 120°C, preferably 100 to 120°C, more preferably 100 to 115°C, and even more preferably 100 to 110°C. A melting point within the above range is advantageous in terms excellent fusion properties during foam molding, which is achieved due to a low heating dimensional change rate of the foam molded body and good compatibility with polyolefin-based resins. The melting point can be determined by the method described in the Examples.

As the polyethylene-based resin, commercially available resins can be used. Polyethylene-based resins are available, for example, from Tosoh Corporation, Japan Polyethylene Corporation, Prime Polymer Co., Ltd., and Asahi Kasei Corporation. As the polyethylene-based resin, recycled products, such as recycled resins obtained by recovering and recycling polyethylene-based resins that have been used as packaging materials or the like, can also be used.

Polypropylene-based Resin

The polypropylene-based resin is not particularly limited, and any known resin can be used. Examples of the polypropylene-based resin include homopolymers, random copolymers, block copolymers, and the like. Random copolymers are preferred in terms of high moldability (i.e., foam-molding can be performed at a low vapor pressure, and the foam expansion ratio during foaming tends to be high).

As the polypropylene-based resin, a recycled product, such as a recycled resin obtained by recovering and recycling a polypropylene-based resin that has been used as a packaging material or the like, can also be used.

The copolymer may contain an olefin other than propylene (e.g., ethylene or butene). Examples of random copolymers include an ethylene-propylene random copolymer, a propylene-butene random copolymer, an ethylene-propylene-butene random copolymer, and the like. Examples of block copolymers include an ethylene-propylene block copolymer, a propylene-butene block copolymer, an ethylene-propylene-butene block copolymer, and the like.

The proportion of the component derived from olefin other than propylene in the copolymer can be, for example, 0.01 to 10 mass%, 0.01 to 8 mass%, 0.1 to 7 mass%, or 0.1 to 6 mass%, preferably 1 to 7 mass%, and more preferably 2 to 6 mass%.

As the polypropylene-based resin, commercially available resins can be used. Such resins are available, for example, from Prime Polymer Co., Ltd., SunAllomer Ltd., and Sumitomo Chemical Co., Ltd.

The content of the polyolefin-based resin in the seed polymerization composite resin (A) can be, for example, 10 to 50 mass%, 10 to 45 mass%, 10 to 40 mass%, 20 to 50 mass%, 20 to 45 mass%, or 20 to 40 mass%, of the seed polymerization composite resin (A).

Polystyrene-based Resin

In the seed polymerization composite resin (A), the polystyrene-based resin is preferably formed by seed polymerization of a styrene-based monomer on polyolefin-based resin particles. The content of the polystyrene-based resin in the seed polymerization composite resin (A) can be, for example, 50 to 90 mass%, 55 to 90 mass%, 60 to 90 mass%, 50 to 80 mass%, 55 to 80 mass%, or 60 to 80 mass% of the seed polymerization composite resin (A). Further, the mass average molecular weight of the polystyrene-based resin is preferably $1.0 \times 10^5$ to $5.0 \times 10^5$ from the standpoints of strength and molding processability.

In the composite resin particles (C), the polystyrene-based resin can be considered individually by dividing the resin into two types: a polystyrene-based resin contained in the seed particles (B); and a polystyrene-based resin that forms a composite with the seed particles (B) by seed polymerization of a styrene-based monomer on the seed particles (B). The content of the latter type of polystyrene-based resin in the composite resin particles (C) can be, for example, 100 to 500 parts by mass, based on 100 parts by mass of the seed particles (B). Having a content of the latter type of polystyrene-based resin within the above range is preferable from the standpoints of molding processability, heat resistance, and impact resistance.

The content of the polystyrene-based resin in the seed polymerization composite resin or the seed polymerization composite resin particles may correspond to the amount of the styrene-based monomer used in the seed polymerization.

Examples of the polystyrene-based resin include polymers derived from styrene-based monomers such as styrene, α-methylstyrene, p-methylstyrene, and 4-tert-butylstyrene. Further, the polystyrene-based resin may be a polymer comprising a styrene-based monomer and another monomer copolymerizable with the styrene-based monomer. Examples of such other monomers include polyfunctional monomers, such as divinylbenzene, and (meth)acrylic acid alkyl esters that contain no benzene ring in the structure, such as butyl (meth)acrylate. The components derived from such other monomers may be contained in the styrene-based polymer in an amount not exceeding 5 mass%.

The seed polymerization composite resin (A) may contain, in addition to the polyolefin-based resin and the polystyrene-based resin, an appropriate amount of a conventional component that has been blended in the seed particles of styrene-based monomer-polyolefin seed polymerization composite resin particles.

Gel Fraction

The seed polymerization composite resin (A) preferably has a gel fraction of 5 to 40 mass%, and more preferably 10 to 30 mass%. A gel fraction within the above range is advantageous in that when the seed polymerization composite resin (A) is pelletized in an extruder and reused as a foam molded body of the styrene-based monomer-polyolefin seed polymerization composite resin, the productivity is improved. The gel fraction is measured in the following manner.

After 1 g of the seed polymerization composite resin (A) is weighed and placed in a flask and 100 ml of toluene is added, the resulting mixture is heated under reflux in an oil bath at 130°C for 24 hours to dissolve the resin. After the flask is removed from the oil bath, the contents of the flask are immediately filtered through a wire net of 80 mesh (diameter: 0.12 mm), and the wire net and the insoluble matter remaining on the wire net are allowed to stand in an oven at 130°C for 1 hour. The pressure is reduced with a vacuum pump and the wire net and the insoluble matter remaining on the wire net are further allowed to stand under reduced pressure for 2 hours to remove the toluene. The weight of the solid remaining on the wire net is measured. The gel fraction is calculated according to the following formula:

$$\text{Gel fraction (\%) = Weight of remaining solid (g) / Weight of sample (g)} \times 100.$$

The content of the seed polymerization composite resin (A) in the seed particles (B) can be, for example, 20 to 100 mass%, 30 to 100 mass%, 40 to 100 mass%, 10 to 90 mass%, 10 to 80 mass%, 10 to 70 mass%, 20 to 90 mass%, 20 to 80 mass%, or 20 to 70 mass%, based on the mass of the seed particles (B).

Other Resins Contained in Seed Particles (B)

The seed particles (B) may contain only the seed polymerization composite resin (A) or may further contain one or more other resins in addition to the seed polymerization composite resin (A). The content of such other resins in the seed particles (B) can be, for example, 0 to 80 mass%, 0 to 70 mass%, 0 to 60 mass%, 10 to 90 mass%, 20 to 90 mass%, 30 to 90 mass%, 10 to 80 mass%, 20 to 80 mass%, or 30 to 80 mass%, based on the mass of the seed particles (B).

Second Polyolefin-based Resin

Examples of such other resins include polyolefin-based resins (also referred to as "the second polyolefin-based resin") and the like. Such resins can be used singly or in a combination of two or more. Examples of the second polyolefin-based resin include the polyolefin-based resins mentioned above as examples. Preferable examples include ethylene-based copolymers, low-density polyethylene, linear low-density polyethylene, high-density polyethylene, and polypropylene; and more preferably ethylene-based copolymers, low-density polyethylene, linear low-density polyethylene, and high-density polyethylene. As the second polyolefin-based resin, recycled products, such as recycled resins obtained by recovering and recycling polyethylene-based resins that have been used as packaging materials or the like can also be used. The second polyolefin-based resin may be the same as or different from the polyolefin-based resin contained in the seed polymerization composite resin (A). For the other matters regarding the second polyolefin-based resin, the matters described above for the polyolefin-based resin can be applied.

In one embodiment, the polyolefin-based resin contained in the seed polymerization composite resin (A) is one or two or more resins selected from the group consisting of branched low-density polyethylene, linear low-density polyethylene, medium-density polyethylene, high-density polyethylene, and crosslinked products of these polymers, and the second polyolefin-based resin is an ethylene-based copolymer.

In one embodiment, the polyolefin-based resin contained in the seed polymerization composite resin (A) is one or two or more resins selected from the group consisting of branched low-density polyethylene, linear low-density polyethylene, medium-density polyethylene, high-density polyethylene, and crosslinked products of these polymers. The second polyolefin-based resin is one or two or more resins selected from the group consisting of branched low-density polyethylene, linear low-density polyethylene, medium-density polyethylene, high-density polyethylene, and crosslinked products of these polymers.

In one embodiment, the polyolefin-based resin contained in the seed polymerization composite resin (A) is an ethylene-based copolymer. The second polyolefin-based resin is one or two or more resins selected from the group consisting of branched low-density polyethylene, linear low-density polyethylene, medium-density polyethylene, high-density polyethylene, and crosslinked products of these polymers.

In one embodiment, the polyolefin-based resin contained in the seed polymerization composite resin (A) is a linear low-density polyethylene, and the second polyolefin-based resin is an ethylene-based copolymer.

In one embodiment, the polyolefin-based resin contained in the seed polymerization composite resin (A) is a linear low-density polyethylene, and the second polyolefin-based resin is a linear low-density polyethylene.

In one embodiment, the polyolefin-based resin contained in the seed polymerization composite resin (A) is a high-density polyethylene, and the second polyolefin-based resin is an ethylene-based copolymer.

In one embodiment, the polyolefin-based resin contained in the seed polymerization composite resin (A) is an ethylene-based copolymer, and the second polyolefin-based resin is a low-density polyethylene.

In one embodiment, the polyolefin-based resin contained in the seed polymerization composite resin (A) is a polypropylene-based resin (preferably a random copolymer), and the second polyolefin-based resin is a polypropylene-based resin (preferably a homopolymer).

Inorganic Component

The seed particles (B) may contain an inorganic component in addition to the polyolefin-based resin and the polystyrene-based resin. Examples of inorganic components include inorganic foam regulators, such as talc, silica, calcium silicate, calcium carbonate, sodium borate, and zinc borate. Talc and silica are preferred in terms of easily homogenizing the foam size.

When the seed particles (B) contain an inorganic component, the inorganic component content can be, for example, 0.01 to 5 mass%, or 0.1 to 1 mass%, based on the seed particles (B) .

Other Components

The seed particles (B) may contain other components in addition to the polyolefin-based resin and the polystyrene-based resin. Examples of other components include colorants, nucleating agents, stabilizers, fillers (reinforcing materials), higher fatty acid metal salts, antistatic agents, lubricants, natural or synthetic oils, waxes, UV absorbers, weather stabilizers, antifogging agents, anti-blocking agents, slip agents, coating agents, and neutron-blocking agents. The content of such other components may be 10 mass% or less, preferably 5 mass% or less, and particularly preferably 0 mass% (i.e., no other components are contained), based on the total mass of the seed particles (B) .

Method of Producing Seed Particles (B)

The seed particles (B) can be obtained by any known method used for producing seed particles for forming a foam molded body, except for using the seed polymerization composite resin (A). For example, the seed polymerization composite resin (A) as a base resin and the other resins that are used as necessary (e.g., a second polyolefin-based resin) are melt-kneaded and extruded in an extruder to obtain strands, and the obtained strands are cut in air, in water, or while being heated to granulate the strands. The resin components may be mixed in a mixer before being fed into the extruder.

The seed particles may have any known shape, but are preferably cylindrical, ellipsoidal (ovoid), or spherical. The shape is more preferably ellipsoidal or spherical in terms of the good ability of foam particles formed from the seed particles to be filled into the mold.

The seed particles preferably have an average particle size of 0.5 to 1.4 mm.

Composite Resin Particles (C)

The composite resin particles (C) is obtained by impregnating the seed particles (B) with a styrene-based monomer and polymerizing the styrene-based monomer on the seed particles (B). That is, the composite resin particles (C) are seed polymerization composite resin particles of styrene-based monomer-seed particles (B).

The composite resin particles (C) may have any known shape, but is preferably cylindrical, nearly spherical, or spherical. In terms of the good ability of composite resin foam particles formed from the composite resin particles (C) to be filled into the mold, the shape of the composite resin particles (C) is more preferably nearly spherical or spherical. The average particle size of the composite resin particles is preferably 0.6 mm to 1.8 mm.

The composite resin particles (C) may have a total volatile organic compound (also referred to as "TVOC") content of 1000 ppm or less, preferably 0 to 800 ppm. The composite resin particles (C) having a TVOC content within the above range are advantageous in terms of stabilizing monomer absorption when used as seed particles. Here, the TVOC does not include a foaming agent. The method for measuring the TVOC is the same as described above.

Method of Producing Composite Resin Particles (C)

The method for producing the composite resin particles (C) is not particularly limited as long as the seed particles (B) is impregnated with a styrene-based monomer and the styrene-based monomer is polymerized on the seed particles (B). For example, the method comprises the step of shredding a base resin to obtain a seed particles (B), and the step of impregnating the seed particle (B) with a styrene-based monomer and polymerizing the styrene-based monomer on the seed particles (B) to obtain the above-described composite resin particles (C).

In this seed polymerization, the amount of the styrene-based monomer used is not particularly limited. The amount of the styrene-based monomer used can be, for example, an amount corresponding to the above-mentioned content of the polystyrene-based resin that forms a composite with the seed particles (B) by seed polymerization of the styrene-based monomer on the seed particles (B), for example, 100 to 500 parts by mass, based on 100 parts by mass of the seed particles (B).

An example of a method for producing the composite resin particles (C) using the seed polymerization method is described below.

First, the seed particles (B), a styrene-based monomer, and, if necessary, a polymerization initiator are dispersed in an aqueous suspension. When a polymerization initiator is used, the styrene-based monomer and the polymerization initiator may be mixed in advance.

As the polymerization initiator, one generally used as an initiator for suspension polymerization of styrene-based monomers can be suitably used. Examples include organic peroxides, such as benzoyl peroxide, di-t-butyl peroxide, t-butyl peroxybenzoate, dicumyl peroxide, 2,5-dimethyl-2,5-di-t-butyl peroxyhexane, t-butyl peroxy-3,5,5-trimethylhexanoate, and t-butyl peroxy-2-ethylhexyl carbonate; azo compounds, such as azobisisobutyronitrile and azobisdimethylvaleronitrile; and the like. One or two or more of these polymerization initiators can be used. Examples of the aqueous medium constituting the aqueous suspension include water and a mixed medium of water and a watersoluble solvent (e.g., $C_1$-$C_6$ alcohol).

The amount of the polymerization initiator used is preferably 0.01 to 0.9 parts by mass, and more preferably 0.1 to 0.5 parts by mass, based on 100 parts by mass of the styrene-based monomer.

A dispersant may be added to the aqueous suspension, as needed. The dispersant is not particularly limited, and any known dispersant can be used. Specific examples include poorly soluble inorganic substances, such as calcium phosphate, magnesium pyrophosphate, sodium pyrophosphate, and magnesium oxide. Further, a surfactant such as sodium dodecylbenzenesulfonate may be used.

Next, the obtained dispersion is heated to a temperature at which the styrene-based monomer does not substantially polymerize, thereby impregnating the seed particles with the styrene-based monomer. The time for impregnating the seed particles with the styrene-based monomer is not particularly limited, and is preferably 20 minutes to 4 hours, and more preferably 30 minutes to 2 hours.

Subsequently, the styrene-based monomer is polymerized. The polymerization is not particularly limited, but is preferably performed at 115°C to 150°C, preferably at 120°C to 145°C, for 1.5 to 5 hours. The polymerization is generally performed in a closed container that can be pressurized. It is preferable to perform impregnation and polymerization of the styrene-based monomer several divided times. By performing impregnation and polymerization several divided times, the generation of polymer powder of the styrene-based resin can be minimized. In addition, in consideration of the decomposition temperature of the polymerization initiator, polymerization may be performed while the styrene-based monomer is impregnated, instead of starting polymerization after the seed particles are impregnated with the styrene-based monomer.

Expandable Particles

The expandable particles contain the composite resin particles (C) and a foaming agent. Examples of usable foaming agents include organic gases such as propane, n-butane, isobutane, n-pentane, isopentane, cyclopentane, n-hexane, and isohexane; and inorganic gases such as carbon dioxide, nitrogen, helium, argon, and air. These foaming agents can be used alone or in a combination of two or more. As the organic gas, any one of n-butane, isobutane, n-pentane, and isopentane, or a combination of these, is suitable.

The content of the foaming agent is preferably 5 to 25 parts by mass, based on 100 parts by mass of the composite resin particles (C).

The expandable particles can be obtained, for example, by impregnating the composite resin particles (C) during or after the polymerization with a foaming agent. Impregnation can be performed by a method known per se. For example, impregnation during polymerization can be performing by performing a polymerization reaction in a closed container, and pressing a foaming agent into the container. Impregnation after polymerization can be performed by, for example, pressing a foaming agent into a closed container containing the composite resin particles (C).

Foam Particle

Foam particles are particles obtained by preliminarily foaming the composite resin particles (C). Foam particles can be obtained, for example, by foaming expandable particles impregnated with a foaming agent. Since foam particles produced using the composite resin particles (C) as a starting material are fused together even in a medium at a low vapor pressure (e.g., water vapor), the energy required for foam molding can be reduced, the equipment required for foam molding can be simplified, and as a result, the cost required for foam molding can be reduced.

The bulk density of the foam particles is preferably 15 kg/m$^3$ to 200 kg/m$^3$, more preferably 20 kg/m$^3$ to 100 kg/m$^3$, and even more preferably 20 kg/m$^3$ to 50 kg/m$^3$. A bulk density within this range is advantageous in terms of the high strength of the foam molded body and the lightweight of the foam molded body.

The shape of the foam particles is preferably spherical or nearly spherical. The average particle size of the foam particles is preferably 1.0 mm to 9.0 mm, and more preferably 2.0 mm to 6.4 mm.

The foam particles can be obtained by foaming expandable particles to a desired bulk density by a known method. Foaming can be achieved by foaming expandable particles using heating vapor at a gauge pressure of preferably 0.05 MPa to 0.20 MPa (gauge pressure), and more preferably 0.06 MPa to 0.15 MPa.

Foam particles obtained by pre-foaming expandable particles, which are obtained by incorporating a foaming agent into the composite resin particles (C), produce little powder. Since powder shortens the life of molds, the foam particles of the present invention are useful in extending the life of molds.

If the foam particles contain too much foaming agent, the foam molded product will expand during foam molding, making it difficult to remove from the mold. Therefore, after the production of foam particles, the foaming agent contained in the foam particles may be allowed to dissipate to adjust the foaming agent content. However, if the time required for this adjustment is long, the time required to shift to foam molding will be long. Therefore, in terms of the molding cycle, it is desirable for the foaming agent to dissipate in a short time. The use of the foam particles of the present invention is advantageous in that the foam particles of the present invention allow for dissipation of the foaming agent to proceed in a shorter time than foam particles obtained using, as seed particles, conventional particles of a melt-kneaded mixture of a polyolefin-based resin and a polystyrene-based resin.

Foam Molded Body

The foam molded body is a foam body composed of a fusion body of foam particles, and is obtained, for example, by foam-molding the foam particles described above. The foam molded body uses the seed particles (B) and the composite resin particles (C) as raw materials, and thus has an excellent compression strength and an excellent heating dimensional change rate.

The density of the foam molded body is, for example, 15 kg/m$^3$ to 200 kg/m$^3$, 20 kg/m$^3$ to 200 kg/m$^3$, etc., preferably 20 kg/m$^3$ to 100 kg/m$^3$, and more preferably 20 kg/m$^3$ to 50 kg/m$^3$. When the density is in the above range, excellent lightweight properties and high strength can both be achieved.

The density of the foam molded body is specified by the method described in the Examples.

The 25% compression strength of the foam molded body can be, for example, 0.15 MPa or more, 0.15 MPa to 0.30 MPa, 0.17 MPa to 0.30 MPa, etc., and is preferably 0.20 MPa to 0.30 MPa. The 25% compression strength is specified by the method described in the Examples.

The heating dimensional change rate of the foam molded body can be, for example, 2.5% or less, 0.1 to 2.5%, and is preferably 0.1 to 2.0%. The heating dimensional change rate can be specified by the method described in the Examples.

The foam molded body can be obtained by filling a mold of a foam molding machine with foam particles, and thermally fusing the foam particles together while foaming the foam particles by heating. The medium for heating that can be preferably used is, for example, water vapor.

When the foam particles of the present invention do not contain a polypropylene-based resin, the particles can be sufficiently foamed and fused even in water vapor at a low pressure (e.g., gauge pressure: 0.10 MPa or less); therefore, the energy required for foam molding can be reduced, the equipment required for foam molding can be simplified, and as a result, the cost required for foam molding can be reduced (i.e., excellent productivity). Furthermore, even when the foam particles of the present invention contain a polypropylene-based resin, the foam particles are sufficiently foamed and fused in water vapor at a gauge pressure of 0.20 MPa or less.

The foam molded body can be used for, for example, cushioning materials, packing materials, building materials, shoe members, and sporting goods. Specific examples include midsole members, insole members, or outsole members of shoes; core materials of hitting equipment for sporting goods, such as rackets and bats; protective equipment of sporting goods, such as pads and protectors; medical, nursing, welfare, or health-care goods, such as pads and protectors; tire core materials of bicycles, wheelchairs, etc.; interior materials, seat core materials, shock-absorbing members, vibration-absorbing members, etc. for transportation equipment, such as automobiles, railway vehicles, and airplanes; fenders; floats; toys; floor foundation materials; wall materials; beds; cushions; transportation containers for electronic components, various industrial materials, and foods; and the like.

Preferred are automobile interior materials, shock-absorbing members, vibration-absorbing members, and component packaging materials.

Examples

An embodiment of the present invention will be described in more detail below with reference to Examples and the like; however, the present invention is not limited thereto.

The methods for specifying various physical properties and the like in the Examples etc. are described below.

Density of Polyolefin-based Resin

The density of the polyolefin-based resin is measured by a density gradient tube method in accordance with JIS K6922-1: 1998.

Melt Flow Rate (MFR) of Polyolefin-based Resin

The MFR was measured at 190°C under a load of 2.16 kg in accordance with JIS K6922-1: 1998.

Melting Point of Polyolefin-based Resin

The melting point was measured by the method described in JIS K7122: 1987 "Testing Methods for Heat of Transitions of Plastics." Specifically, using an RDC220 differential scanning calorimeter device (produced by Seiko Instruments Inc.), a measurement container was filled with 7 mg of a sample, the temperature was raised, lowered, and raised between room temperature and 220°C at a heating and cooling speed of 10°C/L under a nitrogen gas flow rate of 30 mL/min, and the melting peak temperature in the DSC curve during the second temperature rise was defined as the melting point. When two or more melting peaks were present, the lower peak temperature was defined as the melting point.

Softening Temperature of Polyolefin-based Resin (Vicat Softening Point)

The softening temperature was measured according to the method described in JIS 7196: 1991 "Testing method for softening temperature of thermoplastic film and sheeting by thermomechanical analysis." That is, the resin particles were hot pressed and crushed to a thickness of 2 mm, and then a flat rectangular film-like test piece with a length of 10 mm, a width of 20 mm, and a thickness of 2 mm was prepared. Using a heat, stress, and strain measuring device ("TMA/SS6200," product name, produced by Seiko Instruments Inc.), a needle insertion test mode (needle tip area: 1 $mm^2$) was used with a load of 50 g. The needle was placed against the film-like test piece and the temperature was raised at a heating rate of 5°C/min. The temperature at which the film-like test piece began to distort was recorded as the softening temperature (Vicat softening point) of the resin particles.

Mass Average Molecular Weight of Polystyrene-based Resin

The mass average molecular weight was measured using a gel permeation chromatography (GPC) apparatus (model: HLC-8121GPC/HT, produced by Tosoh Corporation) and a column (model: TSKgel GMHhr-H(20)HT, produced by Tosoh Corporation).
As measurement conditions, the column temperature was set to 140°C, and 1,2,4-trichlorobenzene was used as the eluent.
The concentration of the measurement sample was adjusted to 1.0 mg/mL, and the amount of the sample injected into the GPC apparatus was 0.3 mL.
The calibration curve for each molecular weight was calibrated using polystyrene samples with known molecular weights, and the mass average molecular weight (Mw) was calculated in terms of polystyrene.

Gel Fraction

After 1 g of the seed polymerization composite resin (A) or an extrusion-kneaded composite resin of a polyolefin-based resin and a polyolefin-based resin was weighed and placed in a flask, 100 ml of toluene was added, and the resulting mixture was heated under reflux in an oil bath at 130°C for 24 hours to dissolve the mixture. After the flask was removed from the oil bath, the contents of the flask were immediately filtered through a wire net of 80 mesh (diameter: 0.12 mm), and the wire net and the insoluble matter remaining on the wire net were allowed to stand in an oven at 130°C for 1 hour. The pressure is reduced with a vacuum pump, and the wire net and the insoluble matter remaining on the wire net were further allowed to stand under reduced pressure for 2 hours to remove the toluene. The weight of the solid remaining on the wire net was measured. The gel fraction was calculated by the following formula:

$$\text{Gel fraction (\%)} = \text{Weight of remaining solid (g)}/ \text{Weight of sample (g)} \times 100.$$

Bulk Density of Foam Particle

A measuring cylinder was filled with foamed particles up to a scale of 500 $cm^3$. Specifically, the measuring cylinder was visually observed horizontally and the filling was terminated when even one of the composite resin foam particles reached the scale of 500 $cm^3$. Next, the mass of the composite resin foam particles filled in the measuring cylinder was weighed with two significant digits after the decimal point, and the mass was defined as W (g). The bulk density of the composite resin foam particles was calculated by the following formula.

$$\text{Bulk density (kg/m}^3) = (W/500) \times 1000$$

Measurement of Polystyrene Polymer Powder Content

100 ml of 20% hydrochloric acid was added to a slurry of 2L of a suspension containing composite resin particles (this slurry is the contents of the autoclave cooled to 30°C or lower after the second polymerization in the production of the composite resin particles (C)), and the resulting mixture was filtered through a 0.3 mm mesh to separate the composite resin particles from the suspension. 1 L of pure water was added to the filtered composite resin particles to form a slurry again, which was then filtered through a 0.3 mm mesh filter medium. This procedure was repeated 5 times, and the obtained 6 L of the filtrate was subjected to suction filtration using a Buchner funnel (glass fiber filter paper GA-200). The powder on the filter paper obtained by suction filtration and the composite resin particles were individually dried and their weights were measured. The polymer powder content (%) was calculated by the following formula:

$$\text{Polymer powder content (\%)} = \text{Powder weight (g)} / \text{Composite resin particle weight (g)}.$$

Density of Foam Molded Body

The mass (a) and volume (b) of a test piece (75 mm × 300 mm × 35 mm) cut out from a foam molded body (dried at 50°C for 4 hours or more after molding) were each measured to three or more significant digits, and the density (kg/m$^3$) of the foam molded body was determined by the formula (a)/(b).

25% Compression strength of Foam Molded Body

The compression strength was measured by the method described in JIS K7220: 2006 "Rigid Cellular Plastics- Determination of Compression Properties." Specifically, using a Tensilon universal testing machine (UCT-10T, produced by Orientec Co., Ltd.), the compression strength of a test specimen (with upper surface skin) with a size of 50 mm x 50 mm x 25 mm was measured at a compression speed of 10 mm/min when compressed by 25% (at a displacement of 10 mm).

Heating Dimensional Change Rate of Foam Molded Body

The heating dimensional change rate of the foam molded body was measured by the B method described in JIS K 6767: 1999 "Cellular plastics -Polyethylene- Methods of test." A test piece of length 150 mm × width 150 mm × height 20 mm was cut out from the foam molded body. On the surface of the test piece, three straight lines having a length of 50 mm oriented in the longitudinal direction were drawn parallel to each other at intervals of 50 mm, and three straight lines having a length of 50 mm oriented in the lateral direction were also drawn parallel to each other at intervals of 50 **mm.** Thereafter, the test piece was left in a hot air circulation dryer at 80°C for 168 hours, then taken out from the dryer, and left in a standard state (20 ± 2°C, humidity: 65 ± 5%) for 1 hour. Next, the length of each of the six straight lines drawn on the surface of the test piece was measured, and an arithmetic average value L1 of the lengths of the six straight lines was calculated. The degree of change S was calculated based on the following formula, and an absolute value of the degree of change S was defined as the heating dimensional change rate (%).

$$S=100\times(L1-50)/50$$

Moldability of Foam Molded Body: Minimum Water Vapor Pressure to Achieve a Fusion Rate of 90% or More

Composite resin foam particles were placed in a mold (size: 300 mm × 400 mm × 30 mm) of a foam molding machine, and the composite resin foam particles were thermally fused together while the composite resin foam particles were foamed by heating with water vapor. During heating with water vapor (50 seconds), the fusion rate of the obtained foam molded body was determined for each case in which the vapor pressure of the water vapor was changed at intervals of 0.01 MPa from 0.08 MPa to 0.25 MPa. Moldability was evaluated at the lowest vapor pressure value (minimum vapor pressure value) at which a fusion rate of 90% or more was achieved. If a foam molded body with good fusion is obtained at a low vapor pressure, the molding equipment can be simplified and the production energy can be reduced, thus resulting in low production cost and enhanced productivity.

Evaluation of Expandability

2 kg (100 parts by mass) of the composite resin particles, 2 kg of water, and 2.0 g of sodium dodecylbenzenesulfonate (surfactant) were placed in an autoclave equipped with a stirrer having an inner volume of 5 liters. Further, 15 parts by mass of butane (normal butane: isobutene = 7:3 (volume ratio)) was added as a foaming agent, based on 100 parts by mass of the composite resin particles. The temperature was then raised to 70°C and stirring was continued for 4 hours to thereby incorporate the composite resin particles into the composite resin particles. The resulting mixture was then cooled to 30°C or lower. After completion of cooling, the autoclave was depressurized and the surfactant was immediately removed by washing with distilled water, dehydrated, and dried to obtain expandable particles.

The mass (a) of about 2 g of the expandable particles was accurately weighed to two decimal places. The weighed expandable particles were placed in a container, and the container was placed in an expansion vessel whose internal temperature had been confirmed to be 80°C or lower. Water vapor with a gauge pressure of 0.04 MPa (vapor temperature: 99°C) was introduced thereinto. When the temperature in the expansion vessel had reached 90°C, heating at 90 to 100°C was started and continued for 1 minute to foam the expandable particles. The foam expansion ratio was measured immediately after taking out the particles from the expansion vessel. As the foam expansion ratio, the bulk expansion ratio of the foam particles was determined by measuring the volume of about 2 g (a) of the foam particles in a measuring cylinder and dividing the volume by (a). Based on the obtained bulk expansion ratio, evaluation is carried out according to the following criteria:

A bulk expansion ratio of 30-fold or more: O (good)
A bulk expansion ratio of 20-fold or more and less than 30-fold: Δ (acceptable)
A bulk expansion ratio of less than 20-fold: × (not acceptable)

Polyethylene-based Resin

The polyethylene-based resins used in the Examples or the like are as follows. Table 1 shows physical properties of the polyethylene-based resins.

NF444A: Linear low-density polyethylene (produced by Japan Polyethylene Corporation, product number NF444A)

2500: High-density polyethylene (produced by Tosoh Corporation, product number: 2500)

M1703: Low-density polyethylene (produced by Asahi Kasei Corporation, product number: M1703)

EF0505: Ethylene-vinyl acetate copolymer (produced by Asahi Kasei Corporation, vinyl acetate content: 4.7 mass%)

LV115: Ethylene-vinyl acetate copolymer (produced by Japan Polyethylene Corporation, product number: LV115, vinyl acetate content: 4 mass%)

Table 1

| Resin name | Polyethylene-based resin | | | | |
|---|---|---|---|---|---|
| | NF444A (linear low-density PE) | 2500 (high-density PE) | M1703 (low-density PE) | EF0505 (ethylene-vinyl acetate copolymer) | LV115 (ethylene-vinyl acetate copolymer) |
| Density (kg/m$^3$) | 912 | 951 | 918 | Unmeasured | Unmeasured |
| Melting point | 121 | 131 | 110 | 108 | 108 |
| MFR (g/10 min) | 2.0 | 7.9 | 0.3 | 0.5 | 0.3 |
| Softening temperature (°C) | 93 | 131 | Unmeasured | Unmeasured | Unmeasured |

Polypropylene-based Resin

The polypropylene-based resins (PP) used in the Examples are as follows. Table 2 shows physical properties of the polypropylene-based resins.

F744NP: PP random copolymer (produced by Prime Polymer Co., Ltd., ethylene content: 7 mass%)

PL500A: PP homopolymer (produced by SunAllomer Co., Ltd.)

Table 2

|  | Polypropylene-based resin | |
|---|---|---|
| Resin name | F744NP | PL500A |
| Polymerization form | Random copolymer | Homopolymer |
| Melting point (°C) | 140 | 162 |
| MFR (g/10 min) | 7 | 3 |

The polystyrene-based resin used in Comparative Examples is as follows.
HRM26: Polystyrene-based resin (produced by Toyo Styrene Co., Ltd., product name: Toyo Styrol GP, item name: HRM26)

Example 1

Production of Styrene-based Monomer-Polyolefin Seed Polymerization Composite Resin (A)

As a polyethylene-based resin, NF444A was supplied to an extruder, melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes. The resulting mixture was then maintained for 30 minutes to impregnate the seed particles with the styrene monomer. After impregnation, the temperature was raised to 140°C, and polymerization was carried out at this temperature for 2 hours.

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 5 g of t-butyl peroxybenzoate (polymerization initiator) in 1100 g of a styrene monomer was added dropwise at a rate corresponding to 0.05 parts by mass/sec with respect to 100 parts by mass of the seed particles. After dropping, the resulting mixture was maintained at 115°C for 1 hour to thereby impregnate the polyethylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 115°C for 1 hour to thereby impregnate the seed particles with the styrene monomer and foam regulator. After impregnation, the resultant was heated to 140°C and maintained at this temperature for 3 hours for polymerization.

Subsequently, after cooling to 30°C or lower, particles of the styrene-based monomer-polyolefin seed polymerization composite resin (A) were taken out from the autoclave. The mass average molecular weight of the polystyrene resin constituting the particles of the obtained seed polymerization composite resin (A) was measured and found to be $2.5 \times 10^5$

Production of Seed Particles (B)

The particles of the obtained seed polymerization composite resin (A) and LV 115 (second polyolefin-based resin) as an ethylene-vinyl acetate copolymer were placed at a mass ratio of 20:80 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A) and the ethylene-vinyl acetate copolymer.

Production of Seed Polymerization Composite Resin Particles (C) of Styrene-Based Monomer-Seed Particles (B)

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 700 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 350 g of a styrene monomer was added dropwise over 30 minutes, and the resulting mixture was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 3 g of t-butyl peroxybenzoate (polymerization initiator) in 950 g of a styrene monomer was added dropwise at a rate corresponding to 0.05 parts by mass/sec with respect to 100 parts by mass of the seed particles. After dropping, the resulting mixture was maintained at 115°C for 1 hour to thereby impregnate the seed particles (B) with the styrene monomer. After impregnation, the resultant was heated to 140°C and maintained at this temperature for 3 hours for polymerization (second polymerization).

Subsequently, after cooling to 30°C or less, the composite resin particles (C) were taken out from the autoclave.

Production of Expandable Particles

2 kg (100 parts by mass) of the composite resin particles (C), 2 kg of water, and 2.0 g of sodium dodecylbenzenesulfonate (surfactant) were placed in an autoclave equipped with a stirrer having an inner volume of 5 liters. Further, after 15 parts by mass of butane (normal butane: isobutane = 7:3 (by volume)) as a foaming agent was supplied, based on 100 parts by mass of the composite resin particles (C), the temperature was raised to 70°C, and stirring was continued for 4 hours to produce expandable particles. The resulting particles were then cooled to 30°C or lower. After completion of cooling, the autoclave was depressurized, and the surfactant was immediately washed off with distilled water, and the particles were dehydrated and dried to obtain expandable particles.

Production of Foam Particles

The obtained expandable particles were placed into a cylindrical pre-foaming machine equipped with a stirrer having an inner volume of 50 L, and heated with water vapor of 0.02 MPa while stirring to pre-foam the particles, thus obtaining foam particles with a bulk density of 29 kg/m$^3$.

Production of Foam Molded Body

The obtained foam particles were left at 23°C for 1 day, and then placed in a mold for molding (length 400 mm × width 300 mm × thickness 30 mm) of an automatic foamed bead molding machine (DPM-7454, produced by DABO Japan Ltd.). A water vapor of 0.07 MPa was introduced into the mold for 50 seconds to heat and foam the foam particles, followed by cooling until the maximum surface pressure of the resulting foam molded body decreased to 0.01 MPa, thereby obtaining a foam molded body with a density of 29 kg/m$^3$. Table 3 shows the results of various tests.

Example 2

Seed particles (B), composite resin particles (C), expandable particles, foam particles, and a foam molded body were obtained in the same manner as in Example 1, except that the mass ratio of the particles of the styrene-based monomer-polyolefin composite resin (A) to LV115 was 70:30 and the water vapor pressure applied in foam molding was set to 0.06 MPa. Table 3 shows the results of various tests.

Example 3

Production of Foam Molded Body of Styrene-Based Monomer-Polyolefin Seed Polymerization Composite Resin

Particles of a styrene-based monomer-polyolefin seed polymerization composite resin were obtained in the same manner as in Example 1.

2 kg (100 parts by mass) of the seed polymerization composite resin particles, 2 kg of water, and 2.0 g of sodium dodecylbenzenesulfonate (surfactant) were placed in an autoclave equipped with a stirrer having an inner volume of 5 liters. Further, 15 parts by mass of butane (normal butane: isobutane = 7:3 (by volume)) as a foaming agent was supplied, based on 100 parts by mass of the seed polymerization composite resin particles, then the temperature was raised to 70°C, and stirring was continued for 4 hours to produce expandable particles. The resulting particles were then cooled to 30°C or lower. After cooling, the autoclave was depressurized, the surfactant was immediately washed off with distilled water, and the particles were dehydrated, and dried to obtain expandable particles.

The obtained expandable resin particles were placed into a cylindrical pre-foaming machine equipped with a stirrer having an inner volume of 50 L, and heated with a water vapor of 0.02 MPa while stirring to preliminarily foam the particles, thus producing foam particles with a bulk density of 29 kg/m$^3$.

The obtained foam particles were left at 23°C for 1 day, and then placed in a mold for molding (length 400 mm × width 300 mm × thickness 30 mm) of an automatic foamed bead molding machine (DPM-7454, produced by DABO Japan Ltd.). A water vapor of 0.07 MPa was introduced into the mold for 50 seconds to heat and foam the foam particles, followed by cooling until the maximum surface pressure of the resulting foam molded body decreased to 0.01 MPa, thereby obtaining a foam molded body with a density of 29 kg/m$^3$.

Production of Seed Particles (B) (Reuse of Foam Molded Body)

The obtained foam molded body was subjected to a pulverization treatment using a CUM300 type centrifugal mill (grinding track type, 1.0 mm mesh plate) produced by Mitsui Mining Co., Ltd., to prepare pulverized resin particles. The obtained pulverized resin particles were supplied to an extruder and melt-kneaded at a temperature of 230 to 250°C. The kneaded product was cut into cylindrical shapes by a strand cut method to obtain pellets with an average mass of 6 mg.

The obtained pellets (styrene-based monomer-polyolefin seed polymerization composite resin (A) derived from a foam molded body) and NF444A (second polyolefin-based resin) as linear low-density polyethylene were placed at a mass ratio of 50:50 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A) and the linear low-density polyethylene.

Composite resin particles (C), expandable particles, foam particles, and a foam molded body were obtained in the same manner as in Example 1, except that the obtained seed particles (B) were used. Table 3 shows the results of various tests.

Example 4

Production of Foam Molded Body of Styrene-Based Monomer-Polyolefin Seed Polymerization Composite Resin

As a polyethylene-based resin, 2500 was supplied to an extruder and melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 60°C to obtain a suspension. Further, while keeping this suspension at 60°C, a solution prepared by dissolving 0.8 g of dicumyl peroxide (polymerization initiator) in 400 g of a styrene monomer was added dropwise over 30 minutes, and the resulting mixture was then maintained for 30 minutes to impregnate the seed particles with the styrene monomer. After impregnation, the temperature was raised to 140° C, and polymerization was carried out at this temperature for 2 hours.

Next, a dispersion prepared by dispersing 3 g of sodium dodecylbenzenesulfonate in 20 g of pure water was added dropwise over 10 minutes to the reaction liquid cooled to 120°C. Subsequently, a solution obtained by dissolving 4 g of dicumyl peroxide (polymerization initiator) in 800 g of a styrene monomer was added dropwise at a rate corresponding to 0.05 parts by mass/sec with respect to 100 parts by mass of the seed particles. After dropping, the resulting mixture was maintained at 122°C for 1 hour, thereby impregnating the polypropylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 120°C for 1 hour to thereby impregnate the seed particles with the styrene monomer and the foam regulator. After impregnation, the resultant was heated to 140°C and maintained at this temperature for 3 hours for polymerization.

Subsequently, after cooling to 30°C or lower, particles of the styrene-based monomer-polyolefin seed polymerization composite resin were taken out from the autoclave. The mass average molecular weight of the polystyrene resin constituting the obtained seed polymerization composite resin particles was measured and found to be $4.2 \times 10^5$.

Subsequently, a foam molded body having a density of 29 kg/m³ was obtained in the same manner as in Example 3, except that the styrene-based monomer-polyolefin seed polymerization composite resin particles thus obtained were used in place of the styrene-based monomer-polyolefin seed polymerization composite resin particles of Example 3.

Production of Seed Particles (B) (Reuse of Foam Molded Body)

The obtained foam molded body was treated in the same manner as in Example 3 to obtain pellets having an average mass of 6 mg. The obtained pellets (styrene-based monomer-polyolefin seed polymerization composite resin (A) derived from the foam molded body) and EF0505 as an ethylene-vinyl acetate copolymer were placed at a mass ratio of 40:60 in a tumbler mixer and mixed for 10 minutes.

The resulting resin mixture was treated in the same manner as in Example 3 to obtain seed particles (B) (average mass: 0.6 mg/particle) composed of the styrene-based monomer-polyolefin seed polymerization composite resin (A) and the ethylene-vinyl acetate copolymer.

Production of Seed Polymerization Composite Resin Particles (C) of Styrene-Based Monomer-Seed Particles (B)

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.5 g of dicumyl peroxide (polymerization initiator) in 300 g of a styrene monomer was added dropwise over 30 minutes, and the resulting mixture was then maintained for 30 minutes to impregnate the seed particles with the styrene monomer. After impregnation, the temperature was raised to 140°C, and polymerization (first polymerization) was carried out at this temperature for 2 hours. Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 5 g of t-butylperoxybenzoate (polymerization initiator) in 1100 g of a styrene monomer was added dropwise at a rate corresponding to 0.05 parts by mass/sec with respect to 100 parts by mass of the seed particles. After dropping, the resulting mixture was maintained at 115°C for 1 hour to thereby impregnate the seed particles (B) with the styrene monomer. After impregnation, the resultant was heated to 140°C and maintained at this temperature for 3 hours for polymerization (second polymerization). Subsequently, after cooling to 30°C or less, the composite resin particles (C) were taken out from the autoclave.

Expandable particles, foam particles, and a foam molded body were obtained in the same manner as in Example 1, except that the obtained composite resin particles (C) were used. Table 3 shows the results of each test.

Example 5

Production of Foam Molded Body of Seed Polymerization Composite Resin of Styrene-Based Monomer and Polyolefin

As a polyethylene-based resin, EF0505 was supplied to an extruder and melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 60°C to obtain a suspension. Further, while maintaining this suspension at 60°C, a liquid obtained by dissolving 0.8 g of dicumyl peroxide (polymerization initiator) in 400 g of a styrene monomer was added dropwise over 30 minutes, and the resulting mixture was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 122°C. Subsequently, a solution obtained by dissolving 4 g of dicumyl peroxide (polymerization initiator) in 800 g of a styrene monomer was added dropwise at a rate corresponding to 0.05 parts by mass/sec with respect to 100 parts by mass of the seed particles. After dropping, the resulting mixture was maintained at 122°C for 1 hour to thereby impregnate the polypropylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 122°C for 1 hour to thereby impregnate the seed particles with the styrene monomer and the foam regulator. After impregnation, the resultant was heated to 140°C and maintained at this temperature for 3 hours for polymerization.

Subsequently, after cooling to 30°C or less, particles of the styrene-based monomer-polyolefin seed polymerization composite resin were taken out from the autoclave. The mass average molecular weight of the polystyrene-based resin constituting particles of the obtained seed polymerization composite resin was measured and found to be $3.8 \times 10^5$.

Next, a foam molded body having a density of 29 kg/m$^3$ was obtained in the same manner as in Example 3, except that particles of the styrene-based monomer-polyolefin seed polymerization composite resin thus obtained were used in place of the styrene-based monomer-polyolefin seed polymerization composite resin particles of Example 3.

Production of Seed Particles (B) (Reuse of Foam Molded Body)

The obtained foam molded body was treated in the same manner as in Example 3 to obtain pellets having an average mass of 6 mg. The obtained pellets (styrene-based monomer-polyolefin seed polymerization composite resin (A) derived from the foam molded body) and M1703 as low-density polyethylene were placed at a mass ratio of 50:50 in a tumbler mixer and mixed for 10 minutes.

The resulting resin mixture was treated in the same manner as in Example 3 to obtain seed particles (B) composed of the seed polymerization styrene monomer-polyolefin composite resin (A) and the low-density polyethylene (average mass: 0.6 mg/particle).

Production of Seed polymerization Composite Resin Particles (C) of Styrene-Based Monomer-Seed Particles (B)

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 400 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.3 g of dicumyl peroxide (polymerization initiator) in 200 g of a styrene monomer was added dropwise over 30 minutes, and the resulting mixture was then maintained for 30 minutes to impregnate the seed particles with the styrene monomer. After impregnation, the resultant was heated to 140°C and maintained at this temperature for 2 hours for polymerization (first polymerization).

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 8 g of t-butyl peroxybenzoate (polymerization initiator) in 1400 g of a styrene monomer was added dropwise at a rate corresponding to 0.05 parts by mass/sec with respect to 100 parts by mass of the seed particles. After dropping, the resulting mixture was maintained at 115°C for 1 hour to thereby impregnate the seed particles (B) with the styrene monomer. After impregnation, the resultant was heated to 140°C and maintained at this temperature for 3 hours for polymerization (second polymerization). Subsequently, after cooling to 30°C or less, the composite resin particles (C) were taken out from the autoclave.

Expandable particles, foam particles, and a foam molded body were obtained in the same manner as in Example 1, except that the obtained composite resin particles (C) were used. Table 3 shows the results of various tests.

Example 6

Production of Styrene-Based Monomer-Polyolefin Seed Polymerization Composite Resin (A)

As a polyethylene-based resin, NF444A was supplied to an extruder and melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 1400 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes, and the resulting mixture was then maintained for 30 minutes to impregnate the seed particles with the styrene monomer. After impregnation, the resultant was heated to 140°C and maintained at this temperature for 2 hours for polymerization.

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 2 g of t-butyl peroxybenzoate (polymerization initiator) and 3 g of dicumyl peroxide in 300 g of a styrene monomer was added dropwise at a rate corresponding to 0.05 parts by mass/sec with respect to 100 parts by mass of the seed particles. After dropping, the resulting mixture was maintained at 115°C for 1 hour to thereby impregnate the polyethylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 115°C for 1 hour to thereby impregnate the seed particles with the styrene monomer and the foam regulator. After impregnation, the resultant was heated to 140°C and maintained at this temperature for 3 hours for polymerization.

Subsequently, the styrene-based monomer-polyolefin seed polymerization composite resin particles (A) were cooled to 30°C or lower and taken out from the autoclave. The mass average molecular weight of the polystyrene-based resin constituting the particles of the obtained seed polymerization composite resin (A) was measured and found to be 2.7 $\times 10^5$.

Production of Seed Particles (B)

The obtained particles of seed polymerization composite resin (A) were supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A).

Production of Seed Polymerization Composite Resin Particles (C) of Styrene-Based Monomer-Seed Particles (B)

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.5 g of dicumyl peroxide (polymerization initiator) in 300 g of a styrene monomer was added dropwise over 30 minutes, and the resulting mixture was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 4 g of t-butylperoxybenzoate (polymerization initiator) in 1100 g of a styrene monomer was added dropwise at a rate corresponding to 0.05 parts by mass/sec with respect to 100 parts by mass of the seed particles (B). After dropping, the resulting mixture was maintained at 115°C for 1 hour to thereby impregnate the seed particles (B) with the styrene monomer. After impregnation, the temperature was raised to 140°C and maintained at this temperature for 3 hours for polymerization (second polymerization).

Subsequently, after cooling to 30°C or lower, the composite resin particles (C) were taken out from the autoclave.

Expandable particles, foam particles, and a foam molded body were obtained in the same manner as in Example 1, except that the obtained composite resin particles (C) were used. Table 3 shows the results of various tests.

Comparative Example 1

Production of Extrusion-Kneaded Composite Resin of Polyethylene-Based Resin and Polystyrene-Based Resin

2500 as a polyethylene-based resin and HRM26 as a polystyrene-based resin were placed at a mass ratio of 40:60 in a tumbler mixer, and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain particles of the extrusion-kneaded composite resin. The mass average molecular weight of the polystyrene-based resin was measured and found to be 3.2 $\times 10^5$.

Production of Seed Particles (B)

The obtained extrusion-kneaded composite resin particles and EF0505 (a second polyolefin-based resin) as an ethylene-vinyl acetate copolymer were placed at a mass ratio of 40:60 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A) and the ethylene-vinyl acetate copolymer.

Composite resin particles (C), expandable particles, foam particles, and a foam molded body were obtained in the same manner as in Example 4, except that the seed particles (B) thus obtained were used. Table 3 shows the results of various tests.

Comparative Example 2

Production of Styrene-based Monomer-Polyolefin Seed Polymerization Composite Resin (A)

As a polyethylene-based resin, NF444A was supplied to an extruder and melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 100 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.1 g of dicumyl peroxide (polymerization initiator) in 50 g of a styrene monomer was added dropwise over 30 minutes, and the resulting mixture was then maintained for 30 minutes to impregnate the seed particles with the styrene monomer. After impregnation, the temperature was raised to 140°C, and polymerization was carried out at this temperature for 2 hours.

Next, a dispersion prepared by dispersing 3 g of sodium dodecylbenzenesulfonate in 20 g of pure water was added dropwise over 10 minutes to the reaction liquid cooled to 115°C. Subsequently, a solution obtained by dissolving 10 g of t-butyl peroxybenzoate (polymerization initiator) in 1850 g of a styrene monomer was added dropwise at a rate corresponding to 0.03 parts by mass/sec with respect to 100 parts by mass of the seed particles. After dropping, the resulting mixture was maintained at 115°C for 1 hour to thereby impregnate the polyethylene-based resin particles with the styrene monomer. A dispersion medium prepared by dispersing 3 g of ethylenebisstearamide (foam regulator) in 100 g of pure water was added dropwise over 30 minutes. After dropping, the resulting mixture was maintained at 115°C for 1 hour to thereby impregnate the seed particles with the styrene monomer and the foam regulator. After impregnation, the resultant was heated to 140°C and maintained at this temperature for 3 hours for polymerization. Subsequently, after cooling to 30°C or less, particles of the styrene-based monomer-polyolefin seed polymerization composite resin (A) were taken out from the autoclave. The mass average molecular weight of the polystyrene-based resin constituting the particles of the obtained seed polymerization composite resin (A) was measured and found to be $2.2 \times 10^5$.

Production of Seed Particles (B)

The particles of the obtained seed polymerization composite resin (A) and LV115 as an ethylene-vinyl acetate copolymer were placed at a mass ratio of 90:10 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (seed particles, average mass 0.6 mg) composed of the styrene-based monomer-polyolefin seed polymerization composite resin (A) and the ethylene-vinyl acetate copolymer.

Composite resin particles (C), expandable particles, foam particles, and a foam molded body were obtained in the same manner as in Example 1, except that the obtained seed particles (B) were used and the water vapor pressure applied in the foam molding was set to 0.05 MPa. Table 3 shows the results of various tests.

Comparative Example 3

Production of Styrene-based Monomer-Polyolefin Seed Polymerization Composite Resin (A)

As a polyethylene-based resin, LV115 was supplied to an extruder and melt-kneaded at a temperature of 230 to 250°C. The kneaded product was cut into oval-spherical (egg-shaped) particles by an underwater cutting method to obtain polyethylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.1 g of dicumyl peroxide (polymerization initiator) in 300 g of a styrene monomer was added dropwise over 30 minutes, and the resulting mixture was then maintained for 30 minutes to impregnate the seed particles with the styrene monomer. After impregnation, the temperature was raised to 140°C, and polymerization was carried out at this temperature for 2 hours.

Next, a dispersion prepared by dispersing 3 g of sodium dodecylbenzenesulfonate in 20 g of pure water was added dropwise over 10 minutes to the reaction liquid cooled to 90°C. Subsequently, a solution obtained by dissolving 3.5 g of dicumyl peroxide, 5.2 g of benzoyl peroxide, and 0.2 g of t-butyl peroxide (polymerization initiator) in 1100 g of a styrene monomer was added dropwise at a rate corresponding to 0.05 parts by mass/sec with respect to 100 parts by mass of the seed particles. After dropping, the resulting mixture was maintained at 90°C for 1 hour to thereby impregnate the polyethylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 90°C for 1 hour to thereby impregnate the seed particles with the styrene monomer and the foam regulator. After impregnation, the temperature was raised to 140°C, and polymerization was carried out at this temperature for 3 hours.

Subsequently, after cooling to 30°C or less, the styrene-based monomer-polyolefin seed polymerization composite resin particles (A) was taken out from the autoclave.

The mass average molecular weight of the polystyrene-based resin constituting the particles of the obtained seed polymerization composite resin (A) was measured and found to be $9.1 \times 10^4$.

Production of Seed Particles (B)

Particles of the obtained seed polymerization composite resin (A) and EF0505 as an ethylene-vinyl acetate copolymer were placed at a mass ratio of 20:80 in a tumbler mixer and mixed for 10 minutes. The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A) and the ethylene-vinyl acetate copolymer.

Composite resin particles (C), expandable particles, foam particles, and a foam molded body were obtained in the same manner as in Example 1, except that the obtained seed particles (B) were used and the water vapor pressure applied in foam molding was set to 0.05 MPa. Table 3 shows the results of various tests.

<u>Example 7</u>

Production of Styrene-based Monomer-Polyolefin Seed Polymerization Composite Resin (A)

As a polypropylene-based resin, PL500A was supplied to an extruder and melt-kneaded at a temperature of 230 to 250°C. The kneaded product was cut into oval-spherical (egg-shaped) particles by an underwater cutting method to obtain polypropylene-based resin particles (average mass: 0.6 mg).

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 400 g of the seed particles were dispersed in the dispersing medium at 30°C and maintained for 10 minutes, and then heated to 60°C to obtain a suspension. Further, while maintaining this suspension at 60°C, a liquid obtained by dissolving 0.5 g of dicumyl peroxide (polymerization initiator) in 200 g of a styrene monomer was added dropwise over 30 minutes, and the resulting mixture was then maintained for 30 minutes to impregnate the seed particles with the styrene monomer. After impregnation, the temperature was raised to 140°C, and polymerization was carried out at this temperature for 2 hours.

Next, a dispersion prepared by dispersing 3 g of sodium dodecylbenzenesulfonate in 20 g of pure water was added dropwise over 10 minutes to the reaction liquid cooled to 122°C. Subsequently, a solution obtained by dissolving 5 g of dicumyl peroxide (polymerization initiator) in 1400 g of a styrene monomer was added dropwise at a rate corresponding to 0.05 parts by mass/sec with respect to 100 parts by mass of the seed particles. After dropping, the resulting mixture was maintained at 122°C for 1 hour to thereby impregnate the polyethylene-based resin particles with the styrene monomer. A dispersion medium prepared by dispersing 3 g of ethylenebisstearamide (foam regulator) in 100 g of pure water was then added dropwise over 30 minutes. After dropping, the resulting mixture was maintained at 122°C for 1 hour to thereby impregnate the seed particles with the styrene monomer and the foam regulator. After impregnation, the temperature was raised to 140°C, and polymerization was carried out at this temperature for 3 hours.

Subsequently, after cooling to 30°C or less, particles of the styrene-based monomer-polyolefin seed polymerization composite resin (A) were taken out from the autoclave. The mass average molecular weight of the polystyrene-based resin constituting particles of the obtained seed polymerization composite resin (A) was measured and found to be $4.5 \times 10^5$.

Production of Seed Particles (B)

Particles of the obtained seed polymerization composite resin (A) and F744NP as a polypropylene-based resin were placed at a mass ratio of 30:70 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the styrene-based monomer-polyolefin seed polymerization composite resin (A) and the polypropylene-based resin.

Production of Seed Polymerization Composite Resin Particles (C) of Styrene-Based Monomer-Seed Particles (B)

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles (B) were dispersed in the dispersing medium at 30°C and maintained for 10 minutes, and then heated to 60°C to obtain a suspension. Further, while maintaining this suspension at 60°C, a liquid obtained by dissolving 0.5 g of dicumyl peroxide (polymerization initiator) in 300 g of a styrene monomer was added dropwise over 30 minutes, and the resultant was then maintained for 30 minutes to thereby impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 122°C. Subsequently, a solution obtained by dissolving 4 g of dicumyl peroxide (polymerization initiator) in 1100 g of a styrene monomer was added dropwise at a rate corresponding to 0.05 parts by mass/sec with respect to 100 parts by mass of the seed particles. After dropping, the resulting mixture was maintained at 122°C for 1 hour to thereby impregnate the seed particles (B) with the styrene monomer. After impregnation, the temperature was raised to 140°C, and polymerization (second polymerization) was carried out at this temperature for 3 hours.

Subsequently, after cooling to 30°C or lower, the composite resin particles (C) were taken out from the autoclave.

Expandable particles, foam particles, and a foam molded body were obtained in the same manner as in Example 1, except that the obtained composite resin particles (C) were used and the water vapor pressure applied in foam molding was set to 0.18 MPa. Table 4 shows the results of various tests.

Comparative Example 4

Production of Extrusion-Kneaded Composite Resin Particles (Seed Particles (B)) of Polypropylene-Based Resin and Ethylene-Based Copolymer

F744NP as a polypropylene-based resin and EF0505 as an ethylene-vinyl acetate copolymer were placed at a mass ratio of 80:20 in a tumbler mixer and mixed for 10 minutes.

The obtained resin mixture was supplied to an extruder and melt-kneaded at a temperature of 230 to 250°C. The kneaded product was cut into oval-spherical (egg-shaped) particles by an underwater cutting method to obtain seed particles (B) (average mass: 0.6 mg/particle) composed of the polypropylene-based resin-modified ethylene-vinyl acetate copolymer.

Composite resin particles (C), expandable particles, foam particles, and a foam molded body were obtained in the same manner as in Example 7, except that the obtained seed particles (B) were used and the water vapor pressure applied in foam molding was set to 0.18 MPa. Table 4 shows the results of various tests.

Table 3

| | | | Example 1 | Example 2 | Example 3 | Example 4 | Example 5 | Example 6 | Comp. Ex. 1 | Comp. Ex. 2 | Comp. Ex. 3 |
|---|---|---|---|---|---|---|---|---|---|---|---|
| Seed particles (B) | Resin A | First polyolefin (PO) | NF444A | NF444A | NF444A Recycled product | 2500 Recycled product | EF0505 Recycled product | NF444A | 2500 | NF444A | LV-115 |
| | | Mass average molecular weight of polystyrene (PS) | $2.5 \times 10^5$ | $2.5 \times 10^5$ | $2.5 \times 10^5$ | $4.2 \times 10^5$ | $3.8 \times 10^5$ | $2.7 \times 10^5$ | $3.2 \times 10^5$ (HRM26) | $2.2 \times 10^5$ | $9.1 \times 10^4$ |
| | | Gel fraction (%) | 20 | 20 | 20 | 18 | 22 | 37 | 0.20 | 12 | 21 |
| | | PO:PS (mass ratio) | 30:70 | 30:70 | 30:70 | 40:60 | 40:60 | 70:30 | 40:60 | 5:95 | 30:70 |
| | | Preparation method | Seed polymerization | Seed polymerization | Seed polymerization | Seed polymerization | Seed polymerization | Seed polymerization | extrusion kneading | Seed polymerization | Seed polymerization |
| | Resin B (second polyolefin (PO)) | | LV115 | LV115 | NF444A | EF0505 | M1703 | - | EF0505 | LV115 | EF0505 |
| | Seed-polymerized product or extrusion-kneaded product: second PO (mass ratio) | | 20:80 | 70:30 | 50:50 | 40:60 | 50:50 | 100:0 | 40:60 | 90:10 | 20:80 |
| | PO:PS (mass ratio) | | 86:14 | 51:49 | 65:35 | 76:24 | 70:30 | 70:30 | 76:24 | 15:85 | 86:14 |
| Composite resin particles (C) | Seed particles (B):PS (mass ratio) | | 35:65 | 35:65 | 35:65 | 30:70 | 20:80 | 30:70 | 30:70 | 30:70 | 35:65 |
| | PO:PS (mass ratio) | | 30:70 | 18:82 | 23:77 | 23:77 | 14:86 | 21:79 | 23:77 | 4:96 | 30:70 |
| | Polymer powder content | | 0.40% | 0.80% | 0.40% | 0.50% | 0.70% | 0.50% | 3.2% | 2.9% | 1.1% |
| Foaming step | Minimum vapor pressure | | 0.070 MPa | 0.060 MPa | 0.060 MPa | 0.090 MPa | 0.060 MPa | 0.060 MPa | 0.10 MPa | 0.050 MPa | 0.060 MPa |
| | Expandability (bulk expansion ratio) | | 58 A | 50 A | 44 A | 49 A | 54 A | 42 A | 32 B | 66 C blocking | 61 C blocking |
| | Molding cycle | | 98 sec | 109 sec | 145 sec | 111 sec | 99 sec | 144 sec | 159 sec | 155 sec | 162 sec |

EP 4 541 842 A1

26

(continued)

|  |  | Example 1 | Example 2 | Example 3 | Example 4 | Example 5 | Example 6 | Comp. Ex. 1 | Comp. Ex. 2 | Comp. Ex. 3 |
|---|---|---|---|---|---|---|---|---|---|---|
| Foam molded body | Density (kg/m$^3$) | 29 | 29 | 29 | 29 | 29 | 29 | 29 | 29 | 29 |
|  | 25% compression strength (MPa) | 0.21 | 0.22 | 0.17 | 0.23 | 0.21 | 0.19 | 0.20 | 0.22 | 0.17 |
|  | Heating dimensional change rate (%) | 1.6 | 1.5 | 1.9 | 0.70 | 1.3 | 1.6 | 0.90 | 2.3 | 2.1 |

Table 4

| | | | Example 7 | Comparative Example 4 |
|---|---|---|---|---|
| Seed particles (B) | Resin A | First PO | PL500A | F744NP |
| | | Mass average molecular weight of PS | $4.5 \times 10^5$ | - |
| | | Gel fraction (%) | 0.50 | - |
| | | PO:PS (mass ratio) | 20:80 | 100:0 |
| | | Preparation method | Seed polymerization | - |
| | Resin B (second PO) | | F744NP | EF0505 |
| | Seed-polymerized product or extrusion-kneaded product: second PO (mass ratio) | | 30:70 | 80:20 |
| | PO:PS (mass ratio) | | 76:24 | 100:0 |
| Composite resin particles (C) | Seed particles (B):PS (mass ratio) | | 30:70 | 30:70 |
| | PO:PS (mass ratio) | | 23:77 | 30:70 |
| | Polymer powder content | | 0.90% | 0.60% |
| Foam molding step | Low vapor pressure | | 0.18 MPa | 0.14 MPa |
| | Expandability (bulk expansion ratio) | | 23 B | 33 B |
| | Molding cycle | | 139 sec | 230 sec |
| Foam molded body | Density (kg/m³) | | 29 | 29 |
| | 25% compression strength (MPa) | | 0.21 | 0.21 |
| | Heating dimensional change rate (%) | | 0.30 | 0.80 |

In Examples 1 to 7, a less amount of powder was generated, molding can be performed at a low vapor pressure (excellent productivity), and a short molding cycle (quick dissipation of the foaming agent), a high 25% compression strength, and a low heating dimensional change rate (excellent heat resistance) were achieved; Examples 1 to 7 showed excellent effects as compared with Comparative Examples.

Comparative Example 1 is the same as Example 4 in kind and amount of polyolefin-based resin used and in amount of polystyrene-based resin, but is different in that the seed particles (B) did not contain a styrene-based monomer-polyolefin seed polymerization composite resin (A). In Comparative Example 1, a large amount of polymer powder was generated, and the molding cycle was long. This comparison indicates that based on using the seed particles (B) having the styrene-based monomer-polyolefin seed polymerization composite resin (A), excellent effects are obtained.

In Comparative Example 2, the mass ratio of the polyolefin-based resin to the polystyrene-based resin in the seed particles (B) was 15:85, which falls outside the range of 20:80 to 90:10. In Comparative Example 3, the polystyrene-based resin in the seed polymerization composite resin (A) had a mass average molecular weight of $9.1 \times 10^4$, which falls outside the range of $1.0 \times 10^5$ to $5.0 \times 10^5$. In Comparative Examples 2 and 3, the molding cycle was long and blocking occurred in the evaluation of expandability.

Due to the properties of polypropylene-based resins, the molding cycle tends to be longer (Comparative Example 4). However, by incorporating the styrene-based monomer-polyolefin seed polymerization composite resin (A) into the seed particles (B), the molding cycle was shortened.

Further, due to the properties of polypropylene-based resins, polypropylene-based resins tend to require a high vapor pressure in molding than polyolefin-based resins. However, in Example 7, molding could be performed at a lower vapor pressure for a polypropylene-based resin.

**Claims**

1. Seed particles (B) for producing composite resin particles (C) for the production of foam particles comprising a polyolefin-based resin and a polystyrene-based resin,

the composite resin particles (C) being seed-polymerization composite resin particles of styrene-based monomer-seed particles (B),

the seed particles (B) containing a styrene-based monomer-polyolefin seed polymerization composite resin (A) in an amount of 20 to 100 mass%, based on the seed particles (B), and

the seed particles (B) further containing, in addition to a polyolefin-based resin contained in the seed polymerization composite resin (A), a second polyolefin-based resin in an amount of 0 to 80 mass%, based on the seed particles (B);

the ratio of the content by mass of the polyolefin-based resin to the content by mass of the polystyrene-based resin in the seed particles (B) being in the range of 20:80 to 90:10; and

the polystyrene-based resin in the seed particles (B) having a mass average molecular weight of $1.0 \times 10^5$ to $5.0 \times 10^5$.

2. The seed particles (B) according to claim 1, wherein the seed polymerization composite resin (A) has a gel fraction of 5 to 40 mass% as measured in the following manner:

after 1 g of the seed polymerization composite resin (A) is weighed and placed in a flask and 100 ml of toluene is added, the resulting mixture is heated under reflux in an oil bath at 130°C for 24 hours to dissolve the resin; immediately after the flask is removed from the oil bath, the contents of the flask are filtered through a wire net of 80 mesh (diameter: 0.12 mm), and the wire net and insoluble matter remaining on the wire net are allowed to stand in an oven at 130°C for 1 hour;

the pressure is reduced with a vacuum pump and the wire net and the insoluble matter remaining on the wire net are further allowed to stand under reduced pressure for 2 hours to remove the toluene; and

the weight of the solid remaining on the wire net is measured and the gel fraction is calculated according to the following formula:

Gel fraction (%) = Weight of remaining solid (g)/Weight of sample (g) $\times$ 100.

3. The seed particles (B) according to claim 1 or 2, wherein the polyolefin-based resin contained in the seed polymerization composite resin (A) is at least one resin selected from the group consisting of an ethylene-based copolymer, a polyethylene-based resin, and a polypropylene-based resin, and the second polyolefin-based resin is at least one resin selected from the group consisting of an ethylene-based copolymer, a polyethylene-based resin, and a polypropylene-based resin.

4. The seed particles (B) according to claim 3, wherein

the ethylene-based copolymer is an ethylene-vinyl acetate copolymer, and
the polyethylene-based resin is at least one resin selected from the group consisting of linear low-density polyethylene, high-density polyethylene, and low-density polyethylene.

5. The seed particles (B) according to claim 1 or 2, wherein the second polyolefin-based resin is a resin different from the polyolefin-based resin contained in the seed polymerization composite resin (A).

6. The seed particles (B) according to claim 1 or 2, wherein the seed polymerization composite resin (A) is derived from a foam molded body of a styrene-based monomer-polyolefin composite resin.

7. Composite resin particles (C) for the production of foam particles, the composite resin particles (C) being seed polymerization composite resin particles of styrene-based monomer-seed particles (B), the seed particles (B) being the seed particles (B) of claim 1 or 2.

8. The composite resin particles (C) according to claim 7, wherein the composite resin particles (C) contain a polystyrene-based resin forming a composite with the seed particles (B) in an amount of 100 to 500 parts by mass, based on 100 parts by mass of the seed particles (B).

9. Foam particles of the composite resin particles (C) of claim 7.

10. A foam molded body of the foam particles of claim 9.

11. The foam molded body according to claim 10, having a density of 20 to 200 kg/m$^3$.

12. A method for producing composite resin particles (C) for the production of foam particles comprising a polyolefin-based resin and a polystyrene-based resin, the method comprising the steps of:

shredding a base resin to obtain seed particles (B); and
impregnating the seed particles (B) with a styrene-based monomer and polymerizing the styrene-based monomer on the seed particles (B) to obtain composite resin particles (C), wherein
the base resin is a styrene-based monomer-polyolefin seed polymerization composite resin (A) obtained by the steps of impregnating polyolefin-based resin particles with a styrene-based monomer and polymerizing the styrene-based monomer on the polyolefin-based resin, or is a mixed resin of the seed polymerization composite resin (A) and a second polyolefin-based resin,
the seed particles (B) contain the seed polymerization composite resin (A) in an amount of 20 to 100 mass% based on the seed particles (B),
the seed particles (B) contain the second polyolefin-based resin in an amount of 0 to 80 mass%, based on the seed particles (B),
the ratio of the content by mass of the polyolefin-based resin to the content by mass of the polystyrene-based resin in the seed particles (B) is in the range of is 20:80 to 90:10; and
the polystyrene-based resin in the seed particles (B) has a mass average molecular weight of $1.0 \times 10^5$ to $5.0 \times 10^5$.

13. The method for producing composite resin particles (C) according to claim 12, wherein the seed polymerization composite resin (A) has a gel fraction of 5 to 40 mass% as measured in the following manner:

after 1 g of the seed polymerization composite resin (A) is weighed and placed in a flask and 100 ml of toluene is added, the resulting mixture is heated under reflux in an oil bath at 130°C for 24 hours to dissolve the resin;
immediately after the flask is removed from the oil bath, the contents of the flask are filtered through a wire net of 80 mesh (diameter: 0.12 mm), and the wire net and insoluble matter remaining on the wire net are allowed to stand in an oven at 130°C for 1 hour;
the pressure is reduced with a vacuum pump and the wire net and the insoluble matter remaining on the wire net are further allowed to stand under reduced pressure for 2 hours to remove the toluene; and
the weight of the solid remaining on the wire net is measured and the gel fraction is calculated according to the following formula:

Gel fraction (%) = Weight of remaining solid (g)/Weight of sample (g) $\times$ 100.

14. The method for producing composite resin particles (C) according to claim 12 or 13, wherein

the polyolefin-based resin contained in the seed polymerization composite resin (A) is at least one resin selected from the group consisting of an ethylene-based copolymer, a polyethylene-based resin, and a polypropylene-based resin, and
the second polyolefin-based resin is at least one resin selected from the group consisting of an ethylene-based copolymer, a polyethylene-based resin, and a polypropylene-based resin.

15. The method for producing composite resin particles (C) according to claim 14, wherein the ethylene-based copolymer is an ethylene-vinyl acetate copolymer, and the polyethylene-based resin is at least one resin selected from the group consisting of linear low-density polyethylene, high-density polyethylene, and low-density polyethylene.

16. The method for producing composite resin particles (C) according to claim 12 or 13, wherein the second polyolefin-based resin is a resin that is different from the polyolefin-based resin contained in the seed polymerization composite resin (A).

17. The method for producing composite resin particles (C) according to claim 12 or 13, wherein the seed polymerization composite resin (A) is derived from a foam molded body of a styrene-based monomer-polyolefin composite resin.

18. The method for producing composite resin particles (C) according to claim 12 or 13, wherein in the step of obtaining the composite resin particles (C), the styrene-based monomer is used in an amount of 100 to 500 parts by mass, based on 100 parts by mass of the seed particles (B).

## INTERNATIONAL SEARCH REPORT

| International application No. |
| --- |
| **PCT/JP2023/021683** |

**A. CLASSIFICATION OF SUBJECT MATTER**

*C08J 9/16*(2006.01)i; *C08F 255/02*(2006.01)i; *C08L 23/02*(2006.01)i; *C08L 23/06*(2006.01)i; *C08L 23/08*(2006.01)i; *C08L 23/10*(2006.01)i; *C08L 51/06*(2006.01)i

FI: C08J9/16 CET; C08F255/02; C08L23/02; C08L23/06; C08L23/08; C08L23/10; C08L51/06

According to International Patent Classification (IPC) or to both national classification and IPC

**B. FIELDS SEARCHED**

Minimum documentation searched (classification system followed by classification symbols)

C08J9/00 - 9/42, C08F251/00 - 283/00, C08F283/02 - 289/00, C08F291/00 - 297/08, C08K3/00 - 13/08, C08L1/00 - 101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-229325 A (KANEKA CORP.) 14 October 2010 (2010-10-14) entire text | 1-18 |
| A | JP 2007-270116 A (SEKISUI PLASTICS CO., LTD.) 18 October 2007 (2007-10-18) entire text | 1-18 |
| A | JP 2011-144379 A (NOVA CHEMICALS, INC.) 28 July 2011 (2011-07-28) entire text | 1-18 |
| A | WO 2022/065253 A1 (SEKISUI PLASTICS CO., LTD.) 31 March 2022 (2022-03-31) entire text | 1-18 |
| A | JP 2009-114432 A (KANEKA CORP.) 28 May 2009 (2009-05-28) entire text | 1-18 |
| A | JP 2008-075076 A (SEKISUI PLASTICS CO., LTD.) 03 April 2008 (2008-04-03) entire text | 1-18 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 June 2023** | **11 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/021683**

### C. DOCUMENTS CONSIDERED TO BE RELEVANT

| Category* | Citation of document, with indication, where appropriate, of the relevant passages | Relevant to claim No. |
|---|---|---|
| A | WO 2013/031417 A1 (JSP CORP) 07 March 2013 (2013-03-07)<br>entire text | 1-18 |
| A | JP 2020-050790 A (SEKISUI PLASTICS CO., LTD.) 02 April 2020 (2020-04-02)<br>entire text | 1-18 |
| A | JP 2015-086255 A (JSP CORP) 07 May 2015 (2015-05-07)<br>entire text | 1-18 |
| A | JP 2009-161749 A (KANEKA CORP.) 23 July 2009 (2009-07-23)<br>entire text | 1-18 |
| A | JP 2015-183182 A (SEKISUI PLASTICS CO., LTD.) 22 October 2015 (2015-10-22)<br>entire text | 1-18 |
| A | JP 2017-179212 A (JSP CORP) 05 October 2017 (2017-10-05)<br>entire text | 1-18 |
| A | JP 2015-189912 A (SEKISUI PLASTICS CO., LTD.) 02 November 2015 (2015-11-02)<br>entire text | 1-18 |
| A | JP 2018-203871 A (JSP CORP) 27 December 2018 (2018-12-27)<br>entire text | 1-18 |
| A | JP 2015-172155 A (SEKISUI PLASTICS CO., LTD.) 01 October 2015 (2015-10-01)<br>entire text | 1-18 |
| A | WO 2007/138916 A1 (JSP CORP) 06 December 2007 (2007-12-06)<br>entire text | 1-18 |
| A | JP 2016-121325 A (SEKISUI PLASTICS CO., LTD.) 07 July 2016 (2016-07-07)<br>entire text | 1-18 |
| A | US 4303756 A (SEKISUI KASEIHIN KOGYO K.K.) 01 December 1981 (1981-12-01)<br>whole document | 1-18 |
| A | US 4677134 A (ATLANTIC RICHFIELD CO.) 30 June 1987 (1987-06-30)<br>whole document | 1-18 |

Form PCT/ISA/210 (second sheet) (January 2015)

INTERNATIONAL SEARCH REPORT
Information on patent family members

International application No.

**PCT/JP2023/021683**

| Patent document cited in search report | | | Publication date (day/month/year) | Patent family member(s) | | | Publication date (day/month/year) |
|---|---|---|---|---|---|---|---|
| JP | 2010-229325 | A | 14 October 2010 | (Family: none) | | | |
| JP | 2007-270116 | A | 18 October 2007 | (Family: none) | | | |
| JP | 2011-144379 | A | 28 July 2011 | US whole document WO whole document EP whole document | 2005/0154115 2005/065938 1701844 | A1 A1 A1 | |
| WO | 2022/065253 | A1 | 31 March 2022 | TW whole document | 202222940 | A | |
| JP | 2009-114432 | A | 28 May 2009 | (Family: none) | | | |
| JP | 2008-075076 | A | 03 April 2008 | (Family: none) | | | |
| WO | 2013/031417 | A1 | 07 March 2013 | US whole document | 2014/0221517 | A1 | |
| JP | 2020-050790 | A | 02 April 2020 | (Family: none) | | | |
| JP | 2015-086255 | A | 07 May 2015 | (Family: none) | | | |
| JP | 2009-161749 | A | 23 July 2009 | (Family: none) | | | |
| JP | 2015-183182 | A | 22 October 2015 | (Family: none) | | | |
| JP | 2017-179212 | A | 05 October 2017 | CN whole document TW whole document | 107266701 201807043 | A A | |
| JP | 2015-189912 | A | 02 November 2015 | US whole document WO whole document EP whole document | 2016/0340489 2015/146529 3124521 | A1 A1 A1 | |
| JP | 2018-203871 | A | 27 December 2018 | (Family: none) | | | |
| JP | 2015-172155 | A | 01 October 2015 | US whole document WO whole document EP whole document | 2017/0002163 2015/137353 3118231 | A1 A1 A1 | |
| WO | 2007/138916 | A1 | 06 December 2007 | US whole document EP whole document | 2009/0186954 2022817 | A1 A1 | |
| JP | 2016-121325 | A | 07 July 2016 | (Family: none) | | | |
| US | 4303756 | A | 01 December 1981 | (Family: none) | | | |
| US | 4677134 | A | 30 June 1987 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014196444 A
- JP 2016190991 A